# EUROPEAN PATENT APPLICATION

(11) **EP 4 716 132 A1**
(43) Date of publication of application: **25.03.2026**
(21) Application number: 23938870.5
(22) Date of filing: 31.05.2023
(51) Int. Cl.: H04L 5/00

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Wendong, Dongguan, Guangdong 523860 (CN)
(74) Representative: Taor, Simon Edward William
(86) International application number: PCT/CN2023/097537
(87) International publication number: WO 2024/243879

(57) **Abstract**

A wireless communication method, a terminal device, and a network device. The method comprises: a network device acquires a first bitstream group, wherein the first bitstream group comprises bitstreams fed back by terminals in a first terminal group to the network device, each terminal in the first terminal group is deployed with a first encoder, and the bitstreams are obtained by the terminals encoding channel state information on the basis of the first encoders; the network device decodes the first bitstream group on the basis of a first decoder to obtain a first output information group, wherein the first output information group comprises output information obtained by the network device decoding the bitstreams in the first bitstream group; the network device performs training on the basis of the first bitstream group and the first output information group to obtain a second decoder; and the network device sends model information of the second decoder to the terminals in the first terminal group.

## Description

### TECHNICAL FIELD

The embodiments of the present disclosure relate to the field of communication, and particularly to a wireless communication method, a terminal device, and a network device.

### BACKGROUND

In the related art, in order to ensure the performance of channel state information (CSI) feedback based on artificial intelligence (AI), it is considered to introduce a method of monitoring model performance, in which for example, model performance is monitored through a terminal. Therefore, an urgent problem to be solved is to ensure the accuracy of monitoring the model performance at the terminal.

### SUMMARY

The present disclosure provides a wireless communication method, a terminal device, and a network device, which can ensure the accuracy of monitoring model performance.

A first aspect provides a wireless communication method, including a wireless communication method, a network device, and a terminal device, the method includes the following operations. A network device acquires a first bitstream group. The first bitstream group includes a bitstream fed back by each terminal in a first terminal group to the network device. A first encoder is deployed on each terminal in the first terminal group, and the bitstream is obtained by encoding channel state information through the terminal based on the first encoder. The network device decodes the first bitstream group based on a first decoder to obtain a first output information group. The first output information group includes output information obtained by decoding each bitstream in the first bitstream group through the network device. The network device trains a second decoder based on the first bitstream group and the first output information group. The network device transmits model information of the second decoder to each terminal in the first terminal group.

A second aspect provides a wireless communication method, and the method includes the following operations. A network device transmits a first bitstream group and/or a first output information group to a first terminal. The first bitstream group includes a bitstream fed back by each terminal in a first terminal group to the network device, and a first encoder is deployed on each terminal in the first terminal group. The bitstream is obtained by encoding channel state information through the terminal based on the first encoder. The first output information group includes output information obtained by decoding each bitstream in the first bitstream group through the network device based on the first decoder.

A third aspect provides a wireless communication method, and the method includes the following operations. A first terminal transmits a first bitstream to a network device. A first encoder is deployed on the first terminal, and the first bitstream is obtained by encoding channel state information through the first terminal based on the first encoder. A first decoder is deployed on the network device. The first terminal receives model information of a second decoder transmitted by the network device, and the second decoder is trained by the network device based on a first bitstream group and a first output information group. The first bitstream group includes a bitstream fed back to the network device by each terminal in the first terminal group, the first output information group includes output information obtained by decoding each bitstream in the first bitstream group through the network device based on the first decoder, and the first terminal group includes the first terminal.

A fourth aspect provides a wireless communication method, and the method includes the following operations. A first terminal acquires a first bitstream group and a first output information group. The first bitstream group includes a bitstream fed back by each terminal in a first terminal group to a network device, a first encoder is deployed on each terminal in the first terminal group, the bitstream is obtained by encoding input channel state information through each terminal based on the first encoder, and the first output information group includes output information obtained by decoding each bitstream in the first bitstream group through the network device based on the first decoder. The first terminal trains a second decoder based on the first bitstream group and the first output information group.

A fifth aspect provides a terminal device configured to perform the method in any one of the above-described third to fourth aspects or implementations thereof. Specifically, the terminal device includes functional modules configured to perform the method in any one of the above-described third to fourth aspects or implementations thereof.

A sixth aspect provides a network device configured to perform the method in any one of the above-described first to second aspects or implementations thereof.

Specifically, the network device includes functional modules configured to perform the method in any one of the above-described first to second aspects or implementations thereof.

A seventh aspect provides a terminal device including a processor and a memory. The memory is configured to store a computer program, and the processor is configured to invoke and run the computer program stored in the memory to perform the method in any of the above-described third to fourth aspects or implementations thereof.

An eighth aspect provides a network device including a processor and a memory. The memory is configured to store a computer program, and the processor is configured to invoke and run the computer program stored in the memory to perform the method in any of the above-described first to second aspects or implementations thereof.

A ninth aspect provides a chip configured to implement the method in any one of the above-described first to fourth aspects or implementations thereof. Specifically, the chip includes a processor for invoking and running a computer program from a memory to enable a device on which the chip is mounted to perform the method in any one of the above-described first to fourth aspects or implementations thereof.

A tenth aspect provides a computer-readable storage medium for storing a computer program that causes a computer to perform the method in any one of the above-described first to fourth aspects or implementations thereof.

An eleventh aspect provides a computer program product comprising a computer program instruction that causes a computer to perform the method in any one of the above-described first to fourth aspects or implementations thereof.

A twelfth aspect provides a computer program that, when run on a computer, causes a computer to perform the method in any one of the above-described first to fourth aspects or implementations thereof.

According to the above technical solution, the network device or the terminal device may train the second decoder based on the feedback bitstream and output information of the first decoder deployed on the network device as a data set, so that the second decoder can simulate the function of the first decoder and establish a relationship between the feedback bitstream and the output of the first decoder. In this way, the terminal device can locally monitor model functions of the first encoder and the first decoder through the first encoder and the second decoder deployed therein, thereby ensuring the accuracy of monitoring the model performance.

### BRIEF DESCRIPTION OF THE DRAWINGS

FIG. 1 is a schematic architecture diagram of a communication system according to an embodiment of the present disclosure.
FIG. 2 is a schematic diagram of a neuronal structure.
FIG. 3 is a schematic diagram of a neural network.
FIG. 4 is a schematic diagram of a convolutional neural network.
FIG. 5 is a schematic diagram of a long short-term memory (LSTM) unit.
FIG. 6 is a schematic structural diagram of a channel state information (CSI) autoencoder.
FIG. 7 is a schematic diagram of a method for monitoring model performance according to an embodiment of the present disclosure.
FIG. 8 is a schematic diagram of another method for monitoring model performance according to an embodiment of the present disclosure.
FIG. 9 is a schematic interaction diagram of a wireless communication method according to an embodiment of the present disclosure.
FIG. 10 is a schematic interaction diagram of a model training method according to an embodiment of the present disclosure.
FIG. 11 is a schematic interaction diagram of a model training method according to another embodiment of the present disclosure.
FIG. 12 is a schematic interaction diagram of another wireless communication method according to an embodiment of the present disclosure.
FIG. 13 is a schematic interaction diagram of a model training method according to an embodiment of the present disclosure.
FIG. 14 is a schematic interaction diagram of a model training method according to another embodiment of the present disclosure.
FIG. 15 is a schematic block diagram of a network device according to an embodiment of the present disclosure.
FIG. 16 is a schematic block diagram of a terminal device according to an embodiment of the present disclosure.
FIG. 17 is a schematic block diagram of a terminal device according to an embodiment of the present disclosure.
FIG. 18 is a schematic block diagram of a network device according to an embodiment of the present disclosure.
FIG. 19 is a schematic block diagram of a communication device according to an embodiment of the present disclosure.
FIG. 20 is a schematic block diagram of a chip according to an embodiment of the present disclosure.
FIG. 21 is a schematic block diagram of a communication system according to an embodiment of the present disclosure.

### DETAILED DESCRIPTION

Hereinafter, the technical solution in the embodiments of the present disclosure is described with reference to the accompanying drawings in the embodiments of the present disclosure, and it is apparent that the described embodiments are part of the embodiments of the present disclosure, rather than all the embodiments. All other embodiments obtained by those skilled in the art without creative work based on the embodiments in the present disclosure fall within the scope of protection of the present disclosure.

The technical solution of the embodiment of the present disclosure can be applied to various communication systems, such as a global system of mobile communication (GSM) system, a code division multiple access (CDMA) system, and a wideband code division multiple access (WCDMA) system, a general packet radio service (GPRS), a long term evolution (LTE) system, an advanced long term evolution (LTE-A) system, a new radio (NR) system, an evolution of NR system, an LTE-based access to unlicensed spectrum (LTE-U) system, a NR-based access to unlicensed spectrum (NR-U) system, a non-terrestrial network (NTN) system, an universal mobile telecommunication system (UMTS), a wireless local area network (WLAN), a wireless fidelity (WiFi), a fifth-generation (5G) system or other communication systems, etc.

Generally speaking, the conventional communication system supports a limited number of connections and is easy to implement. However, with the development of communication technology, the mobile communication system will support not only conventional communication, but also, for example, a device to device (D2D) communication, a machine to machine (M2M) communication, a machine type communication (MTC), a vehicle to vehicle (V2V) communication, or a vehicle to everything (V2X) communication, and the like, and the embodiment of the present disclosure can also be applied to these communication systems.

Optionally, the communication system in the embodiment of the present disclosure may be applied to a carrier aggregation (CA) scenario, a dual connectivity (DC) scenario, and a standalone (SA) network deployment scenario.

Optionally, the communication system in the embodiment of the present disclosure may be applied to an unlicensed spectrum. The unlicensed spectrum may also be regarded as a shared spectrum. Alternatively, the communication system in the embodiment of the present disclosure may also be applied to a licensed spectrum, and the licensed spectrum may also be regarded as a non-shared spectrum.

The embodiments of the present disclosure are described in conjunction with a network device and a terminal device. The terminal device may also be referred to as a user equipment (UE), an access terminal, a user unit, a user station, a mobile station, a mobile table, a remote station, a remote terminal, a mobile device, a user terminal, a terminal, a wireless communication device, a user agent or a user equipment, etc.

The terminal device may be a STATION (STA) in a WLAN, may be a cellular telephone, a cordless telephone, a session initiation protocol (SIP) telephone, a wireless local loop (WLL) station, a personal digital assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved public land mobile network (PLMN) network, etc.

In an embodiment of the present disclosure, the terminal device may be deployed on land including indoors or outdoors, or may be hand-held, wearable or vehicle-mounted. The terminal device may also be deployed on the water (such as ships, etc.). The terminal device can may be deployed in the air (such as airplanes, balloons and satellites, etc).

In an embodiment of the present disclosure, the terminal device may be a mobile phone , a pad, a computer having a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example and not limitation, the terminal device may also be a wearable device in the embodiments of the present disclosure. The wearable devices may also be called wearable intelligent devices, which are the general name of wearable devices developed by applying wearable technology to intelligently design daily wearing, such as glasses, gloves, watches, clothing and shoes. The wearable devices are portable devices that is worn directly on the body or integrated into the user's clothes or accessories. The wearable device is not merely a kind of hardware device, but can realize powerful functions through software support, data interaction and cloud interaction. Generalized wearable smart devices include for example smart watches or smart glasses which have full functions, large size and can realize complete or partial functions without relying on smart phones, and also includes for example various smart bracelets and smart jewelries for monitoring physical signs which only focus on certain application functions, and is used in conjunction with other devices such as smart phones.

In an embodiment of the present disclosure, the network device may be a device for communicating with a mobile device, the network device may be an access point (AP) in the WLAN, a base transceiver station (BTS) in the GSM or CDMA, a NodeB (NB) in may the WCDMA, an evolutional Node B (eNB or eNodeB) in the LTE, or a relay station or an access point, or a vehicle-mounted device, a wearable device, a network device or a gNB in an NR network, a network device in a future evolved PLMN network or a network device in an NTN network, etc.

By way of example and not limitation, the network device may be mobile, for example the network device may be a mobile device in the present disclosure. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite and the like. Optionally, the network device can also be a base station arranged on land, water and the like.

In an embodiment of the present disclosure, the network device can provide services for a cell, and the terminal device communicates with the network device through the transmission resources (e.g. frequency domain resources, or spectrum resources) used by the cell. The cell can be a cell corresponding to the network device (e.g. base station), and the cell can belong to a macro eNodeB or a base station corresponding to a small cell. The small cell can include a metro cell, a micro cell, a pico cell, a femto cell, etc. The small cells have the characteristics of small coverage and low transmission power, and are suitable for providing high-speed data transmission services.

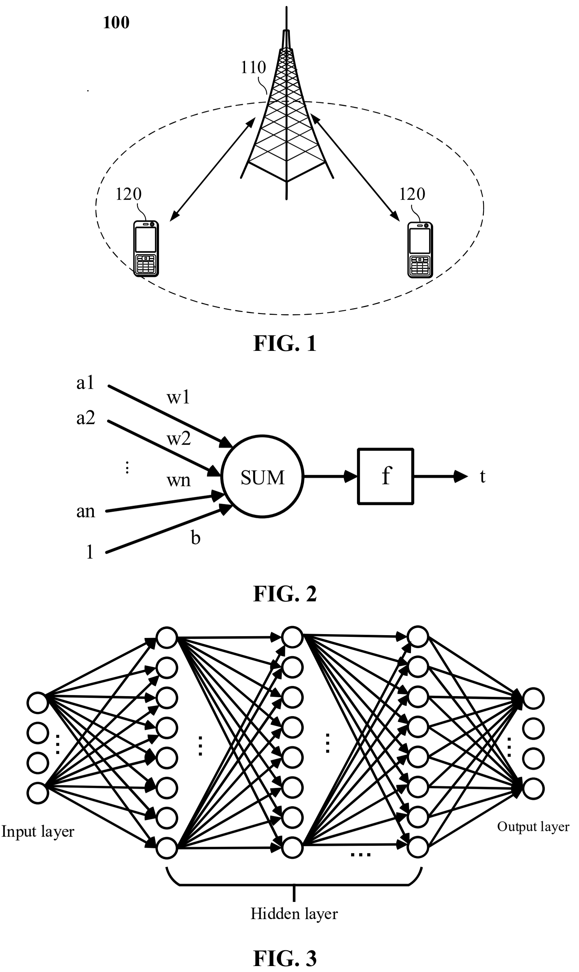

Exemplarily, the communication system 100 applied in the embodiment of the present disclosure is shown in FIG. 1. The communication system 100 may include a network device 110, which may be a device that communicates with a terminal device 120 (or referred to as a communication terminal, a terminal). The network device 110 may provide communication coverage for a particular geographic area and may communicate with terminal devices located within the coverage area.

FIG. 1 exemplarily illustrates one network device and two terminal devices. Optionally, the communication system 100 may include a plurality of network devices, and another number of terminal devices may be included within the coverage range of each network device, which is not limited by the embodiment of the present disclosure.

Optionally, the communication system 100 may further include other network entities such as a network controller and a mobility management entity, which is not limited in the embodiment of the present disclosure.

It should be understood that a device with a communication function in the network/system in the embodiment of the present disclosure may be referred to as a communication device. Taking the communication system 100 shown in FIG. 1 as an example, the communication device may include a network device 110 and a terminal device 120 with a communication function, and the network device 110 and the terminal device 120 may be specific devices described above, and will not be repeated here. The communication device may also include other devices in the communication system 100, such as a network controller and a mobility management entity and other network entities, which are not limited in the embodiments of the present disclosure.

It should be understood that the terms "system" and "network" are often used interchangeably herein. Herein, the term "and/or" merely describes an association relationship that associated objects, indicating that there can be three relationships, for example, A and/or B can mean that only A, and both A and B, and only B. In addition, the character "/" in the present disclosure generally indicates that the related objects have a "or" relationship.

It should be understood that the term "indication" in the embodiments of the present disclosure may represent a direct indication, an indirect indication, or an association relationship. For example, an expression "A indicates B" may mean that A directly indicates B, for example, B can be obtained through A, or may also mean that A indirectly indicates B, for example, A indicates C, and B can be obtained by C, or can also indicate that there is an association relationship between A and B.

In the description of the embodiments of the present disclosure, the term "correspondence" may represent a direct correspondence or an indirect correspondence relationship, or may represent an association relationship, or may also represent a relationship between indication and being indicated, configuration and being configured, etc.

In an embodiment of the present disclosure, the term "predefine" may be implemented by pre-storing codes, tables or other means used to indicate relevant information in a device (including for example a terminal device and a network device), and the specific implementation is not limited in the present disclosure. For example, the term "predefine" may indicate defining in the protocol.

In the embodiment of the present disclosure, the "protocol" may refer to a standard protocol in the communication field, for example, may include an LTE protocol, a NR protocol and related protocols applied in future communication systems, which are not limited in the present disclosure.

In order to facilitate better understanding of the embodiments of the present disclosure, neural networks and deep learning concerned in the present disclosure are described.

The neural network is an operation model composed of multiple neuron nodes connected to each other, in which the connection between nodes represents a weighted value from the input signal to the output signal, and the weighted value is called a weight. Each node performs weighted summation (SUM) on different input signals and outputs through a specific activation function (f). FIG. 2 is a schematic diagram of a neuron structure, a1, a2, ..., an represent the input signals, w1, w2, ..., wn represent the weights, f represents the excitation function, and t represents the output.

A simple neural network, as shown in FIG. 3, includes an input layer, a hidden layer and an output layer. Different outputs may be generated through different connection methods, weights and activation functions of multiple neurons, and a mapping relationship from input to output can be fitted. Each node at an upper level is connected to all nodes at a lower level. The neural network is a fully connected neural network, which may also be called a deep neural network (DNN).

Deep neural networks having multiple hidden layers are used in deep learning, which greatly improves the ability of the network for learning features and can fit complex nonlinear mapping from input to output. The deep neural networks are widely used in the fields of speech and image processing. In addition to the deep neural networks, deep learning further includes the convolutional neural network (CNN), the recurrent neural network (RNN), or a common basic structure, for different tasks.

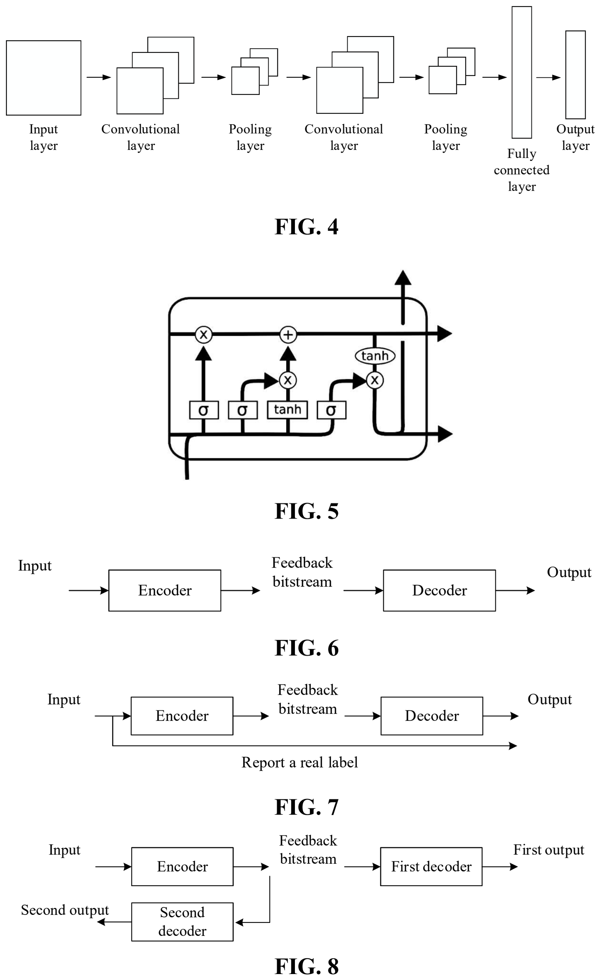

The basic structure of a convolutional neural network includes: an input layer, multiple convolutional layers, multiple pooling layers, a fully connected layer and an output layer, as shown in FIG. 4. Each neuron of the convolution kernel in the convolutional layer is locally connected to an input thereof, and the local maximum or average value of a layer is extracted by introducing a pooling layer, which effectively reduces the parameters of the network and finds the local features, enabling the convolutional neural network to converge quickly and obtain excellent performance.

The RNN is a neural network that models sequence data and has made remarkable achievements in the field of natural language processing, such as applications in machine translation and speech recognition. Specifically, the network remembers information of the past moment and uses the information in the calculation of the current output, that is, the nodes between the hidden layers are no longer unconnected but connected, and the input of the hidden layer comes from not only the input layer but also the output of the hidden layer at the previous time. The commonly used RNNs include the long short-term memory (LSTM) network and the gated recurrent unit (GRU). FIG. 5 shows a basic LSTM unit structure, which can contain the tanh activation function. Unlike RNN, which only considers the most recent state, the cell state of LSTM will determine which states should be left behind and which states should be forgotten, which solves the shortcomings of traditional RNN in long-term memory.

In order to facilitate a better understanding of the embodiments of the present disclosure, a codebook-based channel state information (CSI) feedback scheme in the present disclosure will be described.

In the NR system, the codebook-based feature vector feedback is usually used to make the base station acquire downlink CSI. Specifically, the base station transmits a downlink CSI-RS to the terminal, and the terminal estimates the CSI of the downlink channel using the CSI-RS, and performs eigenvalue decomposition on the estimated downlink channel to obtain an eigenvector corresponding to the downlink channel. Further, the NR system provides two codebook design schemes, Type 1 and Type 2, Type 1 codebook is used for CSI feedback in conventional accuracy and is mainly used for CSI feedback in the single user multiple input multiple output (SU-MIMO) scenario, and Type 2 codebook is used to improve the transmission performance of the multiple user multiple input multiple output (MU-MIMO).

For both Type 1 codebook and Type 2 codebook, a two-level codebook feedback of W=W1W2 is adopted, W1 describes the wideband and long-term characteristics of the channel, and W2 describes the sub-band and short-term characteristics of the channel. In general, the Type 2 codebook has CSI feedback performance with high accuracy by using larger feedback bits.

In order to facilitate a better understanding of the embodiments of the present disclosure, an artificial intelligence (AI)-based CSI feedback scheme in the present disclosure will be described.

In view of the great success of AI technology, especially deep learning, in computer vision, natural language processing, etc., the deep learning has begun to be used in the communication field to solve technical problems such as deep learning that are difficult to be solved by traditional communication methods. The neural network architecture commonly used in deep learning is nonlinear and data-driven. The neural network architecture can perform feature extraction on the channel matrix data and restore the channel matrix information compressed and fed back on the terminal side as much as possible on the base station side. While restoring the channel information, the overhead of the CSI feedback can also be reduced on the terminal side. The deep leaning-based CSI feedback, which takes channel information as an image to be compressed, compresses and feeds back the channel information by using the deep learning autoencoder, and reconstructs the compressed channel image at the sending end, which can retain channel information to a greater extent.

The structure of a typical channel information feedback system (or AI-based CSI autoencoder) is shown in FIG. 6. The feedback system is divided into an encoder and a decoder, which are respectively deployed at the terminal sending end and the base station receiving end. After the sending end obtains channel information through channel estimation, the channel information matrix is compressed and encoded through the neural network of the encoder, and the compressed bitstream is fed back to the receiving end through the air interface feedback link, and the receiving end recovers the channel information according to the feedback bitstream through the decoder to obtain complete feedback channel information. The backbone network of the encoder and the decoder shown in FIG. 6 can adopt a DNN composed of multi-layer fully connected layers, a CNN composed of multi-layer convolutional layers, or an RNN having a structure such as the LSTM or the GRU. The performance of the encoder and the decoder can be improved by various neural network architectures such as residual error and self-attention mechanism.

Each of the CSI input of the encoder and the CSI output of the decoder may be full-channel information or feature vector information obtained based on the full channel information. Therefore, the channel information feedback method based on deep learning is divided into full-channel information feedback and feature vector feedback at present. Although the full-channel information feedback can compress and feedback full-channel information, the feedback bitstream overhead is high. The AI-based feature vector feedback method can have a higher CSI feedback accuracy with the same feedback bit overhead, or significantly reduce the feedback overhead when the same CSI feedback accuracy is achieved.

The codebook-based CSI feedback method has good generalization performance for different users and various channel scenarios. However, because the codebook has been preset, the correlation between different antenna ports and subbands is not effectively utilized, so the feedback performance is poor under the same feedback overhead, or the feedback overhead is higher when the same feedback performance is achieved.

The AI-based CSI feedback scheme can extract the correlation of feature vectors in time domain and frequency domain, and thus can achieve better feedback performance with lower feedback overhead. However, the encoder and the decoder used in this scheme all adopt the neural network model. When the environment of the training set is consistent with the environment in which the model is actually deployed (i.e. the environment of the test set), the AI-based CSI feedback scheme can achieve significant gains in both feedback overhead and feedback performance. However, when the wireless channel environment changes due to cell handover, user movement and other factors, the model may not be suitable for the current wireless channel environment due to poor generalization performance, resulting in poor AI-based CSI feedback performance.

Therefore, it is necessary to design a reasonable model monitoring and management method, so as to update and switch the model in time.

In some scenarios, the performance of the AI model is monitored based on an intermediate KPI for AI-based CSI feedback.

In some implementations, the model performance is monitored at the network side, and FIG. 7 is a schematic diagram of monitoring the model performance by the network. Specifically, the terminal may periodically or aperiodically report the input information of the encoder as a real label to the network, and the network calculates an intermediate key performance index, such as squared generalized cosine similarity (SGCS), between the output of the decoder and the reported real label, and determines whether the performance of the model meets the requirements according to the intermediate key performance index. For example, when the SGCS between the output of the decoder and the reported real label is greater than a certain threshold, it is considered that the model performance meets the requirements, otherwise the model performance does not meet the requirements. In this solution, the terminal quantizes the real label and then report, for example, using a quantization method such as float32, float16, or high-precision Type2 codebook, but the reporting of a large number of real labels will result in high uplink feedback overhead and delay.

In other implementations, the model performance is monitored at the terminal side, and FIG. 8 is a schematic diagram of monitoring the model performance by the terminal. Specifically, the terminal is provided with a second decoder, the terminal takes the bitstream outputted by the encoder as an input of the second decoder to generate a second output, calculates an intermediate key performance index between input information of the encoder and the second output and determines whether the model performance meets the requirements according to the intermediate key performance index. For example, when the SGCS between the input information of the encoder and the second output is greater than a certain threshold, it is considered that the model performance meets the requirement, otherwise the model performance does not meet the requirements. In this scheme, the terminal is not required to report the real label periodically or aperiodically, thereby avoiding additional uplink overhead and delay. However, the accuracy of the method for monitoring model performance depends on the second decoder. The first decoder is usually trained at the network side, and due to the privatization of model implementation, the network side is unable to send the trained first decoder to the terminal for monitoring the model performance. However, when the second decoder is implemented at the terminal itself, a serious problem may be caused that the SGCS obtained at the terminal side (which is obtained based on the input of the encoder and the second output) does not match with the actual SGCS (which is obtained based on the input of the encoder and the first output). For example, the SGCS obtained at the terminal side indicates that the performance is good, but the actual SGCS indicates that the performance is poor, resulting in missed detection. Alternatively, the SGCS obtained at the terminal side indicates that the performance is poor, but the actual SGCS indicates that the performance is good, resulting in false detection. This situation will greatly reduce the accuracy of monitoring model performance at the terminal device side.

Therefore, how to improve the accuracy of monitoring model performance at the terminal device side is an urgent problem to be solved.

In order to facilitate understanding of the technical solutions of the embodiments of the present disclosure, the technical solutions of the present disclosure will be described in detail below with reference to specific examples. As an optional solution, the above related technologies can be arbitrarily combined with the technical solutions of the embodiments of the present disclosure, and all of them belong to the scope of protection of the embodiments of the present disclosure. The embodiments of the present disclosure include at least some of the following.

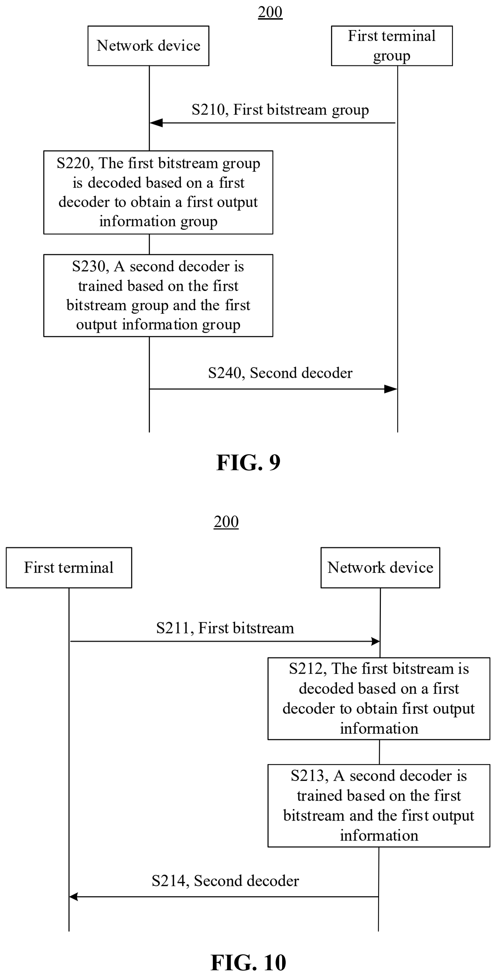

FIG. 9 is a schematic flowchart of a wireless communication method 200 according to an embodiment of the present disclosure, and the method 200 can be executed by a terminal device in the communication system shown in FIG. 1. As shown in FIG. 9, the method 200 includes the following operations S201 to S204.

At S201, a network device acquires a first bitstream group.

At S202, the network device decodes the first bitstream group based on a first decoder to obtain a first output information group.

At S203, the network device trains a second decoder based on the first bitstream group and the first output information group.

At S204, the network device transmits model information of the second decoder to each terminal in a first terminal group.

In some embodiments, the first bitstream group includes a bitstream fed back by each terminal in a first terminal group to the network device. A first encoder is deployed on each terminal in the first terminal group, and the bitstream is obtained by encoding channel state information by the terminal based on the first encoder.

In some embodiments, the first output information group includes output information obtained by decoding each bitstream in the first bitstream group through the network device.

In some embodiments, the first terminal group includes one terminal (denoted as Case 1), or may include a plurality of terminals (denoted as Case 2). Optionally, the plurality of terminals may include a part or all of the terminals in a serving cell corresponding to the network device.

In some embodiments, the first encoder corresponds to the first decoder. For example, the first encoder and the first decoder are obtained by joint training, or the first encoder and the first decoder constitute an AI-based CSI autoencoder.

It should be understood that when the first terminal group includes multiple terminals, the model information of the first encoders deployed on the multiple terminals may be the same or different, which is not limited in the present disclosure.

In some embodiments, the deployment of the first encoder on the terminal may mean that the terminal device stores model information of the first encoder, for example, a model structure and model parameters of the first encoder, and the model information of the first encoder may be obtained by training of the terminal, or obtained by training of the network device and sent to the terminal, or obtained by jointly training of the terminal and the network device, or obtained by training of a third-party device and sent to the terminal. How to acquire the first encoder is not limited in the present disclosure.

In some embodiments, the deployment of the first decoder on the network device may mean that the network device store model information of the first decoder, for example, a model structure and model parameters of the first decoder, and the model information of the first decoder may be obtained by training of the network device, or obtained by training of the terminal and sent to the network device, or obtained by jointly training of the terminal and the network device, or obtained by training of a third-party device and sent to the network device. How to acquire the first decoder is not limited in the present disclosure.

In some embodiments, the first terminal group includes one terminal, such as a first terminal, and the first bitstream group may include a first bitstream, which is a bitstream fed back by the first terminal to the network device, that is, the first bitstream is acquired by the network device from the first terminal.

Correspondingly, the first output information group may include first output information that may be obtained by decoding the first bitstream through the network device based on the first decoder.

It should be understood that, the number of bitstreams included in the first bitstream is not limited in the present disclosure. For example, the first terminal may feedback S bitstreams to the network device, and the number S is predefined, or configured by the network device, or may be selected by the first terminal.

In some embodiments, the first terminal group includes multiple terminals, and the first bitstream group may include a bitstream fed back by each of the multiple terminals, that is, the first bitstream group is acquired by the network device from the multiple terminals.

Correspondingly, the first output information group may include output information obtained by respectively decoding the bitstreams fed back by the multiple terminals the network device based on the first decoder.

It should be understood that, in the embodiment of the present disclosure, the multiple terminals may feedback the same number or different numbers of bitstreams to the network device, and may feedback the same length or different lengths of the bitstreams to the network device, which are not limited in the present disclosure. For example, the number S of bitstreams fed back by each terminal to the network device is predefined, or configured by the network device, or may be selected by each terminal. For example, the length L of the bitstream fed back by each terminal to the network device is predefined, or configured by the network device, or may be selected by each terminal.

In some embodiments, the bitstream fed back by the terminal in the first terminal group to the network device may be obtained by encoding channel state information through the terminal based on the first encoder deployed on the terminal, and the channel state information may be full channel information, or may be channel information obtained by processing full channel information, for example, feature vector information obtained based on full channel information, which is not limited in the present disclosure.

In some embodiments, the operation that the network device trains the second decoder based on the first bitstream group and the first output information group may include the following operation.

The network device trains the second decoder with taking the first bitstream group as an input and taking the first output information group as a label.

It should be understood that the bitstream in the first bitstream group has a correspondence relationship with the output information in the first output information group, and when the network device trains the second decoder, the bitstream and the output information having the correspondence relationship are used as inputs and labels, respectively, for model training.

It should be noted that, since the label for training the second decoder is the output information of the first decoder and is not the actual downlink channel state information, the second decoder is not used to restore the highest accuracy downlink channel state information, but is used to simulate the function of the first decoder and establish a relationship between the bitstream fed back by the terminal and the output information of the first decoder. Generally speaking, the first decoder is implemented as a privatized model at the network device side, which may be relatively complex (the first decoder has for example a deep CNN or a Transformer model with complex structures). The second decoder is trained according to the output information of the first decoder, which can make the model be implemented relatively simple (the second decoder has for example a CNN with a shallow structure, or a Transformer model). The network device sends the second decoder to the terminal instead of directly publicly sending the first decoder, which reduces the overhead of downloading the model while protecting privatization of the first decoder, and enables the terminal to locally monitor the model performance of the combination of the first encoder and the first decoder through the combination of the first encoder and the second decoder.

In some embodiments, the operation that the network device transmits model information of the second decoder to each terminal in the first terminal group may include the following operations.

If the first terminal group includes one terminal, the network device may transmit the model information of the second decoder to the one terminal in a unicast manner.

Alternatively, if the first terminal group includes multiple terminals, the network device may transmit the model information of the second decoder to the one terminal in a broadcast, multicast, or unicast manner.

In some embodiments, the model information of the second decoder may include a model structure, model parameters and the like of the second decoder.

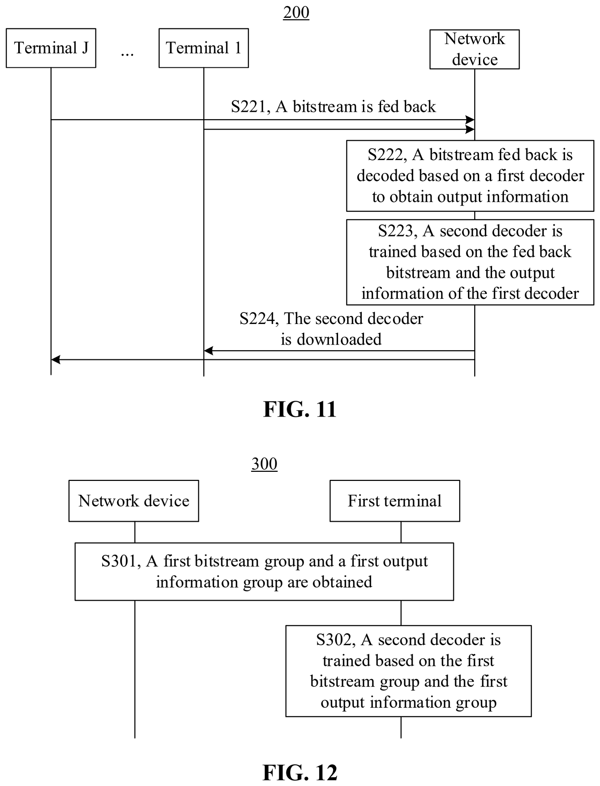

Hereinafter, a specific flow of the method of training the second decoder in the above two cases will be respectively described with reference to FIG. 10 and FIG.11.

In the example of FIG. 10, the first terminal group includes only the first terminal. As shown in FIG. 10, the following operations S211 to S214 may be included.

At S211, a first terminal transmits a first bitstream to a network device.

A first encoder is deployed on the first terminal, and the first terminal may encode channel state information based on the first encoder to obtain a first bitstream, and further feedback the first bitstream to the network device.

For example, S downstream CSI samples are measured by the first terminal within a period of time, denoted as W, and outputs S bitstreams of fixed length L through the first encoder (i.e., the first bitstream may include S bitstreams), denoted as B.

At S212, the network device may decode the first bitstream based on a first decoder to obtain first output information.

[**00115]** That is, the first output information is channel state information recovered by the network device through the first decoder, or decoding information of the bitstream fed back by the first terminal.

[**00116]** For example, the network device inputs S bitstreams into the first decoder and outputs S output information (i.e., the first output information may include S output information), which is denoted as ***Ŵ****.*

[**00117]** At S213, the network device trains a second decoder based on the first bitstream and the first output information.

[**00118]** For example, the second decoder is trained with the first bitstream as an input and the first output information as a label.

[**00119]** Subsequent to the above example, the network device may train the second decoder by taking B as an input and ***Ŵ*** as a label.

[**00120]** At S214, the network device transmits a model of the second decoder to the first terminal.

[**00121]** Further, the first terminal may detect model performance of the first encoder and the first decoder based on the combination of the first encoder and the second decoder. For example, the first terminal may measure X downlink CSI samples, input the X downlink CSI samples into the first encoder to generate a second bitstream, input the second bitstream into the second decoder to obtain X pieces of output information, then calculate an intermediate key performance index (e.g., SGCS) of the X pieces of output information and the X downlink CSI samples, and determine model performance of the first encoder and the first decoder based on the intermediate key performance index. For example, if the SGCS of the X pieces of output information and the X downlink CSI samples is greater than the first threshold, it is considered that the model performance of the first encoder and the first decoder meets the requirements, otherwise the model performance does not meet the requirements. The first threshold may be predefined, or configured by the network device, or may be determined by the first terminal.

[**00122]** In some embodiments, when the second decoder is trained based on the bitstream fed back by a single terminal, it may be considered that the second decoder is UE-specific to the terminal, or it may be considered that the second decoder is adapted to the physical resource configuration (pr-config) and the CSI feedback payload configuration (fp-config) of the single terminal.

[**00123]** In some embodiments, the physical resource configuration of the terminal may include, for example, but is not limited to: the number of sub-bands and the number of antenna ports arranged on the terminal.

[**00124]** In some embodiments, the channel state information feedback payload configuration of the terminal may refer to, for example, the length of a bitstream on which the terminal performs CSI feedback.

[**00125]** In the example of FIG. 11, the first terminal group includes multiple terminals, for example, terminal 1, terminal 2, ... and terminal J, and J is a positive integer greater than 1. As shown in FIG. 11, the following operations S221 to S224 may be included.

[**00126]** At S221, a terminal in the first terminal group transmits a bitstream to a network device.

[**00127]** For example, the first terminal group may include J terminals, respectively denoted as terminal 1, terminal 2, ... and terminal J, and the first bitstream group may include bitstreams fed back by J terminals.

[**00128]** A first encoder is deployed on each of the J terminals, and the bitstream fed back by each terminal may be obtained by encoding the measured channel state information based on the first encoder deployed thereon.

[**00129]** For example, terminal j (1 ≤ *j* ≤ *J*) measures during a period of time *Sⱼ* downlink CSI samples, denoted as ***W**ⱼ*, and generates through the first encoder deployed on the terminal j, *Sⱼ* bitstreams with a fixed length *Lⱼ,* denoted as ***B**ⱼ.*

[**00130]** It should be understood that the J terminals may feedback bitstreams with the same length L or different lengths L, and may feedback the same number (i.e. S) or different numbers of the bitstreams, which are not limited in the present disclosure.

[**00131]** At S222, the network device may decode bitstreams fed back by the terminals in a first terminal group based on a first decoder to obtain a first output information group. That is, the first output information group includes the decoding information corresponding to the bitstream fed back by each terminal in the first terminal group.

[**00132]** For example, the network device inputs *Sⱼ* bitstreams fed back by the terminal j into the first decoder and outputs *Sⱼ* output information, recorded as ***Ŵ****ⱼ.*

[**00133]** At S223, the network device trains a second decoder based on the first bitstream group and the first output information group.

[**00134]** For example, the second decoder is trained with taking the first bitstream group as an input and the first output information group as a label.

[**00135]** Following the above example, the network device may combine J combinations (***B**ⱼ,****Ŵ****ⱼ*) of feedback bitstreams and output information, and train the second decoder by taking ***B**ⱼ* as the input and ***Ŵ****ⱼ* as the label to compose the training data set.

[**00136]** At S224, the network device sends a model of the second decoder to J terminals in the first terminal group.

[**00137]** In some embodiments, when the second decoder is trained based on a bitstream fed back by a terminal group (i.e. multiple terminals), it may be considered that the second decoder is UE-group-specific, that is, the second decoder may be adapted to all terminals in the terminal group. Optionally, when the terminal group includes all terminals in the cell, it may be considered that the second decoder is cell-specific, that is, the second decoder is adapted to all terminals in the cell.

[**00138]** In some embodiments, when the second decoder is trained based on the bitstream fed back by the terminal group (i.e., multiple terminals), the adaptability of the second decoder may be determined by configurations of the multiple terminals, which may include, for example, but is not limited to, a physical resource configuration, a channel state information feedback payload configuration.

[**00139]** In some embodiments, the multiple terminals in the first terminal group have the same physical resource configuration (pr-config), and in this case, it may be considered that the second decoder is adapted to the same physical resource configuration, that is, the second decoder is adapted to a specific physical resource configuration, that is, the second decoder is pr-config-specific.

[**00140]** In some embodiments, the multiple terminals in the first terminal group have different physical resource configurations, and in this case, it may be considered that the second decoder has generalization for different physical resource configurations, or it may be considered that the second decoder is adapted to the different physical resource configurations. For example, the plurality of terminals include j terminals, and the number of antenna ports corresponding to the terminal j is *Pⱼ*, if the numbers of antenna ports of the J terminals are different, it may be considered that the second decoder is adapted to any configuration of the number of antenna ports, or it may be considered that the second decoder is adapted to *P*₁*, P*₂*, ... , Pⱼ.*

[**00141]** In some embodiments, the multiple terminals in the first terminal group have the same channel state information feedback payload configuration (fp-config), and in this case, it may be considered that the second decoder is adapted to the same channel state information feedback payload configuration. That is, the second decoder is adapted for specific channel state information feedback payload configuration, that is, the second decoder is fp-config-specific.

[**00142]** In some embodiments, the multiple terminals in the first terminal group have different channel state information feedback payload configurations, and in this case, it may be considered that the second decoder has generalization for different channel state information feedback payload configurations, or it may be considered that the second decoder is adapted to the different channel state information feedback payload configurations. For example, the multiple terminals include J terminals, and the channel state information feedback payload configuration corresponding to the terminal j is denoted as *Lⱼ*, and if the channel state information feedback payload configurations of the J terminals are different, it may be considered that the second decoder is adapted to any channel state information feedback payload configuration, or it may be considered that the second decoder is adapted to *L*₁*, L*₂, *... , Lⱼ.*

[**00143]** In a specific embodiment, when the multiple terminals in the first terminal group have the same physical resource configuration and the same channel state information feedback payload configuration, it may be considered that the second decoder trained by the bitstream obtained based on the configuration is adapted to a specific physical resource configuration and a specific channel state information feedback payload configuration, and in this case, it may be considered that the second decoder may is pr-fp-config-specific. It may be considered that the second decoder trained based on the above configuration is a UE-group-specific model.

[**00144]** In another specific embodiment, when the multiple terminals in the first terminal group have different physical resource configurations and the same channel state information feedback payload configuration, it may be considered that the second decoder trained by the bitstream obtained based on the configuration is fp-config-specific, and has generalization for the terminals with different pr-config. It may be considered that the second decoder trained based on the above configuration is a UE-group-specific model.

[**00145]** In yet another specific embodiment, when the multiple terminals in the first terminal group have the same physical resource configuration and different channel state information feedback payload configurations, it may be considered that the second decoder trained by the bitstream obtained based on the configuration is pr-config-specific, and has generalization for the terminals with different fp-config. It may be considered that the second decoder trained based on the above configuration is a UE-group-specific model.

[**00146]** In yet another specific embodiment, when the multiple terminals in the first terminal group have different physical resource configurations and different channel state information feedback payload configurations, it may be considered that the second decoder trained by the bitstream obtained based on the configuration has generalization for terminals with different pr-config and fp-config. It may be considered that the second decoder trained based on the above configuration is a cell-group-specific model.

[**00147]** Therefore, in the embodiment of the present disclosure, the network device may train the second decoder based on the bitstream fed back by the terminal group (including multiple terminals), and the network device side may be able to collect a sufficient amount of data as a training set, and thus obtains the second decoder with good generalization performance. Also, the second decoder may be UE-group-specific or cell-specific, and the second decoder having different generalization performance is trained by combining one or more different configurations of data in the terminal group, thereby reducing the switching overhead of the second decoder at the terminal side.

[**00148]** In some embodiments of the present disclosure, the method 200 further comprises the following operation.

[**00149]** The network device transmits first indication information to the terminal in the first terminal group, and the first indication information indicates adaptation information of the second decoder. For example, the first indication information is used to indicate a configuration to which the second decoder is adapted.

[**00150]** It should be understood that, a manner of transmitting the first instruction information is not limited in the present disclosure. For example, the first instruction information is transmitted by at least one of the following signaling: a radio resource control (RRC), a medium access control control element (MAC CE), and downlink control information (DCI), or the first instruction information may be transmitted by other downlink signaling, which is not limited in the present disclosure.

[**00151]** In some embodiments, the adaptation information of the second decoder comprises at least one of: a physical resource configuration adapted by the second decoder, a channel state information feedback payload configuration adapted by the second decoder, and a cell adapted by the second decoder.

[**00152]** In some embodiments, the network device may explicitly indicate the physical resource configuration, the channel state information feedback payload configuration, and the cell to which the second decoder is adapted, or may implicitly indicate the physical resource configuration, the channel state information feedback payload configuration, and the cell to which the second decoder is adapted. The present disclosure does not limit the specific indication manner.

[**00153]** In some embodiments, when the network device does not indicate the adaptation information of the second decoder, the second decoder is adapted to the physical resource configuration and the channel state information feedback payload configuration currently adopted by the terminals in the first terminal group by default, or to any physical resource configuration and the channel state information feedback payload configuration (that is, the second decoder has generalization for different physical resource configurations and different channel state information feedback payload configurations), or to a serving cell corresponding to the network device, that is, all terminals in the serving cell can use the second decoder.

[**00154]** In some embodiments, when the network device does not indicate the physical resource configuration to which the second decoder is adapted, the second decoder is adapted to the physical resource configuration currently adopted by the terminals in the first terminal group by default, or is adapted to any physical resource configuration, that is, the second decoder has generalization for different physical resource configurations.

[**00155]** In some embodiments, when the network device does not indicate the channel state information feedback payload configuration to which the second decoder is adapted, the second decoder is adapted to the channel state information feedback payload configuration currently adopted by the terminals in the first terminal group by default, or is adapted to any channel state information feedback payload configuration, that is, the second decoder has generalization for different channel state information feedback payload configurations.

[**00156]** In some embodiments, when the network device does not indicate the cell to which the second decoder is adapted, the second decoder is adapted to the cell to which the first terminal group belongs by default.

[**00157]** Hereinafter, a specific instruction manner of the first instruction information will be described with reference to a specific example.

[**00158]** In example 1, the first indication information indicates that the second decoder is adapted to a physical resource configuration and a channel state information feedback payload configuration adopted by the first terminal group, and in this case, it may be considered that the second decoder is pr-fp-config-specific.

[**00159]** For example, the first indication information may explicitly indicate a physical resource configuration and a channel state information feedback payload configuration to which the second decoder is adapted. As an example, the first indication information may indicate an index of the physical resource configuration and an index of the channel state information feedback payload configuration, or may indicate specific contents of the physical resource configuration and specific contents of the channel state information feedback payload configuration.

[**00160]** For another example, the first indication information may implicitly indicate that the second decoder is adapted to the physical resource configuration and the channel state information feedback payload configuration adopted by the first terminal group. As an example, when the first indication information is a specific value (for example, 00), the first indication information indicates that the second decoder is adapted to the physical resource configuration and the channel state information feedback payload configuration adopted by the first terminal group, and in this case, it is not necessary to additionally indicate the physical resource configuration and the channel state information feedback payload configuration.

[**00161]** In example 2, the first indication information indicates that the second decoder is adapted to the physical resource configuration adopted by the first terminal group. In this case, the second decoder may be considered to be pr-config-specific.

[**00162]** For example, the first indication information may explicitly indicate a physical resource configuration to which the second decoder is adapted. As an example, the first indication information may indicate an index of the physical resource configuration, or may indicate specific content of the physical resource configuration.

[**00163]** For another example, the first indication information may implicitly indicate that the second decoder is adapted to the physical resource configuration adopted by the first terminal group. As an example, when the first indication information is a specific value (for example, 01), the first indication information indicates that the second decoder is adapted to the physical resource configuration adopted by the first terminal group, and in this case, it is not necessary to additionally indicate the physical resource configuration. Optionally, it is necessary to additionally indicate the channel state information feedback payload configuration to which the second decoder is adapted.

[**00164]** In example 3, the first indication information indicates that the second decoder is adapted to a channel state information feedback payload configuration adopted by the first terminal group. In this case, it may be considered that the second decoder is fp-config-specific.

[**00165]** For example, the first indication information may explicitly indicate the channel state information feedback payload configuration to which the second decoder is adapted. As an example, the first indication information may indicate an index of the channel state information feedback payload configuration, or may indicate specific content of the channel state information feedback payload configuration.

[**00166]** For another example, the first indication information may implicitly indicate that the second decoder is adapted to the channel state information feedback payload configuration adopted by the first terminal group. As an example, when the first indication information is a specific value (for example, 10), the first indication information indicates that the second decoder is adapted to the channel state information feedback payload configuration adopted by the first terminal group, and in this case, it is not necessary to additionally indicate the channel state information feedback payload configuration. Optionally, it is necessary to additionally indicate the physical resource configuration to which the second decoder is adapted.

[**00167]** In example 4, the first indication information indicates that the second decoder is adapted to a cell to which the first terminal group belongs. In this case, it may be considered that the second decoder is cell-specific.

[**00168]** For example, the first indication information may explicitly indicate a cell to which the second decoder is adapted, and the cell may include a serving cell, or may also include a neighboring cell. As an example, the first indication information may indicate an identity (ID) of a cell to which the second decoder is adapted.

[**00169]** For another example, the first indication information may implicitly indicate that the second decoder is adapted to a cell to which the first terminal group belongs. As an example, when the first indication information is a specific value (for example, 11), the first indication information indicates that the second decoder is adapted to the cell to which the first terminal group belongs, and in this case, it is not necessary to additionally indicate the physical resource configuration and the channel state information feedback payload configuration.

[**00170]** In some embodiments of the present disclosure, the method 200 further comprises the following operation.

[**00171]** When a configuration of the first terminal is inconsistent with the configuration adapted by the second decoder, the first terminal transmits first request information to the network device, and the first request information is used to request updating model information of the second decoder.

[00172] For example, in example 1, the second decoder is pr-fp-config-specific, and when the physical resource configuration or the channel state information feedback payload configuration of the first terminal is changed, the first terminal may request the network device to send a second decoder model adapted to the changed configuration.

[**00173]** For example, in example 2, the second decoder is pr-config-specific, and when the physical resource configuration of the first terminal is changed, the first terminal may request the network device to send a second decoder model adapted to the changed physical resource configuration. When the channel state information feedback payload configuration of the first terminal is changed and the second decoder is adapted to the changed channel state information feedback payload configuration, the first terminal may continue using the second decoder, otherwise the first terminal may request the network device to send a second decoder model adapted to the changed channel state information feedback payload configuration.

[**00174]** For example, in example 3, the second decoder is fp-config-specific, and when the channel state information feedback payload configuration of the first terminal is changed, the first terminal may request the network device to send a second decoder model adapted to the changed channel state information feedback payload configuration. When the physical resource configuration of the first terminal is changed and the second decoder is adapted to the changed physical resource configuration, the first terminal may continue using the second decoder, otherwise the first terminal may request the network device to send a second decoder model adapted to the changed physical resource configuration.

[**00175]** For example, in example 4, the second decoder is cell-specific, and when the physical resource configuration or the channel state information feedback payload configuration of the first terminal is changed, the first terminal may continue using the second decoder without requesting the network device to update the model.

[**00176]** It should be understood that, the manner of reporting the first request information is not limited in the present disclosure, for example, the first request information may be transmitted by uplink control information (UCI), or may be transmitted by other uplink signaling, which is not limited in the present disclosure.

[**00177]** In summary, in the embodiment of the present disclosure, the network device may train the second decoder based on the bitstream fed back by one or more terminals and the output of the first decoder. Since the label for training the second decoder is the output of the first decoder, the second decoder is used to simulate the function of the first decoder and establish the relationship between the feedback bitstream of the terminal and the output of the first decoder. Furthermore, the network device sends the second decoder to the one or more terminals, so that the one or more terminals can monitor the model functions of the first encoder and the first decoder by the first encoder and the second decoder locally deployed, thereby ensuring the accuracy of monitoring model performance.

[**00178]** In addition, since the first decoder is implemented as a privatization model at the network device side, and the implementation may be complicated. The second decoder is trained according to the output of the first decoder, so the implementation of the model can be relatively simple. By sending the second decoder instead of directly sending the first decoder publicly, the overhead of downloading model can be reduced while protecting the privatization of the first decoder, and model performance on the terminal side can be monitored.

[**00179]** Further, the method in which the network device trains the second decoder based on the bitstreams fed back by the multiple terminals may enable the network device side to collect a sufficient amount of data as a training set, and a second decoder with good generalization performance can be acquired. Also, the second decoder may be UE-group-specific or cell-specific, and the second decoders having different degrees of generalization performance can be trained by combining one or more configurations of data of a plurality of terminals, thereby reducing overhead of switching the second decoder of the terminal.

[**00180]** A wireless communication method according to an embodiment of the present disclosure has been described in detail above with reference to FIG. 9 to FIG. 11, and a wireless communication method according to another embodiment of the present disclosure will be described in detail below with reference to FIG. 12 to FIG. 14.

[**00181]** FIG. 12 is a schematic flowchart of a wireless communication method 300 according to another embodiment of the present disclosure, and the method 300 may be performed by a network device in the communication system shown in FIG. 1. As shown in FIG. 12, the method 300 includes the following operations S301 to S302.

[**00182]** At S301, the first terminal acquires a first bitstream group and a first output information group. The first bitstream group includes a bitstream fed back by each terminal in a first terminal group to a network device, a first encoder is deployed on each terminal in the first terminal group, the bitstream is obtained by encoding input channel state information through the each terminal based on the first encoder, and the first output information group includes output information obtained by decoding each bitstream in the first bitstream group through the network device based on the first decoder.

[**00183]** At S302, the first terminal trains a second decoder based on the first bitstream group and the first output information group.

[**00184]** In the method 300, the second decoder may be trained by the terminal, and the network side does not perform model training and model transfer on an air interface, which is beneficial to reduce the overhead of the network side.

[**00185]** In some embodiments, the first bitstream group may be an input for training the second decoder, and the first output information group is a label for training the second decoder.

[**00186]** In some embodiments, the first terminal group includes only the first terminal (denoted as Case 1).

[**00187]** In this case, the first bitstream group may include a first bitstream, the first output information group may include first output information, the first bitstream is a bitstream fed back by the first terminal to the network device, and the first output information may be obtained by decoding the first bitstream through the network device based on the first decoder. The first bitstream may be generated by the first terminal based on the first encoder, and the first output information may be acquired by the first terminal from the network device.

[**00188]** In some embodiments, the first terminal group includes multiple terminals (denoted as Case 2), the first bitstream group may include a bitstream fed back by each terminal of the multiple terminals, and the first output information group may include output information obtained by respectively decoding the bitstreams fed back by the multiple terminals through the network device based on the first decoder. The first bitstream group may be acquired by the first terminal from the network device, or the bitstream fed back by the first terminal may be generated by the first terminal based on the first encoder deployed thereon, and other bitstreams other than the bitstream fed back by the first terminal may also be acquired from other terminals in the first terminal group. The first output information group may be acquired by the first terminal from the network device.

[**00189]** Optionally, the multiple terminals may include a part or all of the terminals in the serving cell corresponding to the network device.

[**00190]** In some embodiments, the bitstream fed back by the terminal in the first terminal group to the network device may be obtained by encoding channel state information through the terminal based on the first encoder deployed on the terminal, and the channel state information may be full channel information, or may be channel information obtained by processing full channel information, for example, feature vector information obtained based on full channel information, which is not limited in the present disclosure.

[**00191]** In some embodiments, the operation that the first terminal trains a second decoder based on the first bitstream group and the first output information group may include the following operation.

[**00192]** The first terminal trains the second decoder with taking the first bitstream group as an input and the first output information group as a label.

[**00193]** It should be understood that the bitstream in the first bitstream group has a correspondence relationship with the output information in the first output information group, and the first terminal trains the second decoder by respectively using the bitstream and the output information having the correspondence relationship as an input and a label.

[**00194]** Therefore, in the method 300, the network device side does not perform model training and model transfer on the air interface, and the terminal side can train the second decoder only based on the output information of the first decoder sent to the terminal side through the network device side, and monitor the model performance of the combination of the first encoder and the first decoder through the combination of the first encoder and the second decoder. Based on the method 300, a second decoder which is UE-specific to the local terminal may be implemented on the terminal side, and different terminals may adopt different neural network architectures to match the local encoders of the terminals to achieve good monitoring performance.

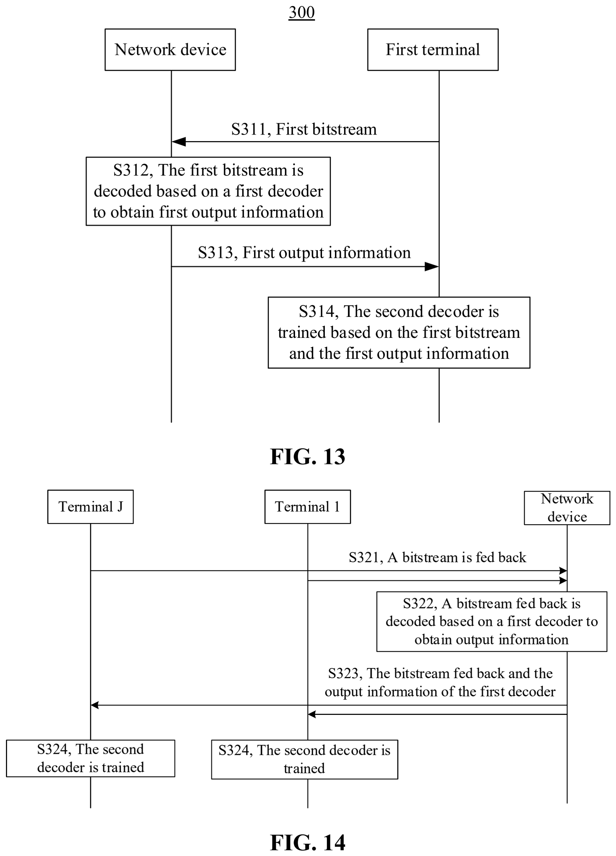

[**00195]** Hereinafter, a specific flow of the method of training the second decoder in the above two cases will be described with reference to FIGS. 13 and 14, respectively.

[**00196]** In the example of FIG. 13, the first terminal group includes only the first terminal. As shown in FIG. 13, the following operations S311 to S314 may be included.

[**00197]** At S311, a first terminal transmits a first bitstream to a network device.

[**00198]** A first encoder is deployed on the first terminal, and the first terminal can encode channel state information based on the first encoder to obtain a first bitstream, and further feedback the first bitstream to the network device.

[**00199]** For example, the first terminal measures S downstream CSI samples within a period of time, denoted as W, and outputs S bitstreams in a fixed length L through the first encoder (i.e., the first bitstream may include S bitstreams), denoted as B.

[**00200]** At S312, the network device may decode the first bitstream based on a first decoder to obtain first output information.

[**00201]** That is, the first output information is channel state information recovered by the network device through the first decoder, or decoding information of the bitstream fed back by the first terminal.

[**00202]** For example, the network device inputs S bitstreams into the first decoder and outputs S output information (i.e., the first output information may include S output information), which is denoted as ***Ŵ****.*

[**00203]** At S313, the network device transmits the first output information to the first terminal.

[**00204]** At S314, the first terminal trains the second decoder based on the first bitstream and the first output information.

[**00205]** For example, the second decoder is trained with taking the first bitstream as an input and the first output information as a label.

[**00206]** Subsequent to the above example, the first terminal may train the second decoder with taking B as an input and ***Ŵ*** as a label.

[**00207]** Further, the first terminal may detect model performance of the first encoder and the first decoder based on the combination of the first encoder and the second decoder. For example, the first terminal may measure X downlink CSI samples, input the X downlink CSI samples into the first encoder to generate a second bitstream, input the second bitstream into the second decoder to obtain X pieces of output information, then calculate an intermediate key performance index (e.g., SGCS) of the X pieces of output information and the X downlink CSI samples, and determine model performance of the first encoder and the first decoder based on the intermediate key performance index. For example, if the SGCS of the X pieces of output information and the X downlink CSI samples is greater than the first threshold, it is considered that the model performance of the first encoder and the first decoder meets the requirements, otherwise the model performance does not meet the requirements. The first threshold may be predefined, or configured by the network device, or may be determined by the first terminal.

[**00208]** In some embodiments, when the second decoder is trained only based on the bitstream fed back by the first terminal, it may be considered that the second decoder is UE-specific to the first terminal, or it may be considered that the second decoder is adapted to the physical resource configuration (pr-config) and the channel state information feedback payload configuration (fp-config) of the first terminal.

[**00209]** In some embodiments, the physical resource configuration of the first terminal may include, for example, but is not limited to: the number of sub-bands and the number of antenna ports arranged on the terminal.

[**00210]** In some embodiments, the channel state information feedback payload configuration of the first terminal may refer to, for example, the length of a bitstream in which the terminal performs CSI feedback.

[**00211]** In the example of FIG. 14, the first terminal group includes multiple terminals, for example, terminal 1, terminal 2, ... and terminal J, and J is a positive integer greater than 1. As shown in FIG. 14, the following operations S321 to S324 may be included.

[**00212]** At S321, a terminal in the first terminal group transmits a bitstream to a network device.

[**00213]** For example, the first terminal group may include J terminals, respectively denoted as terminal 1, terminal 2, ... and terminal J, and the first bitstream group may include bitstreams fed back by the J terminals.

[**00214]** A first encoder is deployed on each of the J terminals, and the bitstream fed back by each terminal may be obtained by encoding the measured channel state information based on the first encoder deployed thereon.

[**00215]** For example, terminal j (1 ≤ *j* ≤ *J*) measures during a period of time *Sⱼ* downlink CSI samples, denoted as ***W**ⱼ*, and generates through the first encoder deployed on the terminal j, *Sⱼ* bitstreams with a fixed length *Lⱼ,* denoted as ***B**ⱼ.*

[**00216]** It should be understood that the J terminals may feedback bitstreams with the same length L or different lengths L, and may feedback the same number (i.e. S) or different numbers of the bitstreams, which are not limited in the present disclosure.

[**00217]** At S322, the network device may decode the bitstreams fed back by the terminals in a first terminal group based on a first decoder to obtain a first output information group. That is, the first output information group includes the decoding information corresponding to the bitstream fed back by each terminal in the first terminal group.

[**00218]** For example, the network device inputs *Sⱼ* bitstreams fed back by the terminal j into the first decoder and outputs *Sⱼ* output information, recorded as ***Ŵ****ⱼ.*

[**00219]** At S323, the network device transmits the first bitstream group and the first output information group to the terminals in the first terminal group.

[**00220]** Following the above example, the network device may combine J combinations (***B**ⱼ,****Ŵ****ⱼ*) of the fed back bitstreams and the output information, and send the J combinations (***B**ⱼ,****Ŵ****ⱼ*) of the fed back bitstreams and the output information as a training data set to the terminals in the first terminal group.

[**00221]** At S324, the terminal in the first terminal trains the second decoder with combining the first bitstreams and the first output information group.

[**00222]** For example, the second decoder is trained based on the combined J data sets (***B**ⱼ,****Ŵ****ⱼ*)*.*

[**00223]** In some embodiments, when the second decoder is trained based on bitstreams fed back by a terminal group (i.e. multiple terminals), it may be considered that the second decoder is UE-group-specific, i.e., the second decoder may be adapted to the terminal group. Alternatively, when the terminal group includes all terminals in a cell, it may be considered that the second decoder is cell-specific, i.e., the second decoder may be adapted to all terminals in a cell.

[**00224]** In some embodiments, when the second decoder is trained based on the bitstream fed back by the terminal group (i.e., multiple terminals), the adaptability of the second decoder may be determined by configurations of the multiple terminals, which may include, for example, but is not limited to, a physical resource configuration, a channel state information feedback payload configuration.

[**00225]** In some embodiments, the multiple terminals in the first terminal group have the same physical resource configuration (pr-config), and in this case, it may be considered that the second decoder is adapted to the same physical resource configuration, that is, the second decoder is adapted to a specific physical resource configuration, that is, the second decoder is pr-config-specific.

[**00226]** In some embodiments, the multiple terminals in the first terminal group have different physical resource configurations, and in this case, it may be considered that the second decoder has generalization for different physical resource configurations, or it may be considered that the second decoder is adapted to the different physical resource configurations. For example, the multiple terminals include J terminals, and the number of antenna ports corresponding to the terminal j is *Pⱼ,* if the numbers of antenna ports of the J terminals are different, it may be considered that the second decoder is adapted to any configuration of the number of antenna ports, or it may be considered that the second decoder is adapted to *P*₁*, P*₂, ···, *P_{J}.*

[**00227]** In some embodiments, the multiple terminals in the first terminal group have the same channel state information feedback payload configuration (fp-config), and in this case, it may be considered that the second decoder is adapted to the same channel state information feedback payload configuration. That is, the second decoder is adapted for specific channel state information feedback payload configuration, that is, the second decoder is fp-config-specific.

[**00228]** In some embodiments, the multiple terminals in the first terminal group have different channel state information feedback payload configurations, and in this case, it may be considered that the second decoder has generalization for different channel state information feedback payload configurations, or it may be considered that the second decoder is adapted to the different channel state information feedback payload configurations. For example, the multiple terminals include J terminals, and the channel state information feedback overhead corresponding to the terminal j is denoted as *Lⱼ,* if the channel state information feedback payload configurations of the J terminals are different, it may be considered that the second decoder is adapted to any channel state information feedback payload configuration, or it may be considered that the second decoder is adapted to *L*₁*, L*₂*, ··· , L_{J}.*

[**00229]** In a specific embodiment, when the multiple terminals in the first terminal group have the same physical resource configuration and the same channel state information feedback payload configuration, it may be considered that the second decoder trained by the bitstream obtained based on the configuration is adapted to a specific physical resource configuration and a specific channel state information feedback payload configuration, and in this case, it may be considered that the second decoder may is pr-fp-config-specific. It may be considered that the second decoder trained based on the above configuration is a UE-group-specific model.

[**00230]** In another specific embodiment, when the multiple terminals in the first terminal group have different physical resource configurations and the same channel state information feedback payload configuration, it may be considered that the second decoder trained by the bitstream obtained based on the configuration is fp-config-specific, and has generalization for the terminals with different pr-config. It may be considered that the second decoder trained based on the above configuration is a UE-group-specific mode.

[**00231]** In yet another specific embodiment, when the multiple terminals in the first terminal group have the same physical resource configuration and different channel state information feedback payload configurations, it may be considered that the second decoder trained by the bitstream obtained based on the configuration is pr-config-specific, and has generalization for the terminals with different fp-config. It may be considered that the second decoder trained based on the above configuration is a UE-group-specific model.

[**00232]** In yet another specific embodiment, when the multiple terminals in the first terminal group have different physical resource configurations and different channel state information feedback payload configurations, it may be considered that the second decoder trained by the bitstream obtained based on the configuration has generalization for the terminals with different pr-config and fp-config. It may be considered that the second decoder trained based on the above configuration is a cell-specific model

[**00233]** Therefore, in the embodiment of the present disclosure, the network device may train the second decoder based on the bitstream fed back by the terminal group (including multiple terminals), and the network device side may be able to collect a sufficient amount of data as a training set, and thus obtains the second decoder with good generalization performance. At the same time, the second decoder may be UE-group-specific or cell-specific, and the second decoder having different generalization performance is trained by combining one or more different configurations of data in the terminal group, thereby reducing the switching overhead of the second decoder at the terminal side.

[**00234]** In some embodiments of the present disclosure, the method 300 further comprises the following operation.

[**00235]** When a configuration of the first terminal is inconsistent with a configuration adapted by the second decoder, the first terminal transmits second request information to the network device, and the second request information is used to request acquiring a data set for training a second decoder adapted to the configuration of the first terminal.

[**00236]** It should be understood that the manner of reporting the second request information is not limited in the present disclosure, for example, the second request information may be transmitted by UCI, or may be transmitted by other uplink signaling, which is not limited in the present disclosure.

[**00237]** In some embodiments, the configuration of the first terminal is inconsistent with the configuration adapted by the second decoder in the following conditions.

[**00238]** The physical resource configuration of the first terminal is inconsistent with the physical resource configuration adapted by the second decoder, and/or, the channel state information feedback payload configuration of the first terminal and the channel state information feedback payload configuration adapted by the second decoder.

[**00239]** In some embodiments, the second decoder is adapted to the physical resource configuration and the channel state information feedback payload configuration adopted by the first terminal group, that is, the second decoder is pr-fp-config-specific. If the physical resource configuration or the channel state information feedback payload configuration of the first terminal is changed, the first terminal may request the network device to send a new training data set for training the second decoder adapted to the changed physical resource configuration or the changed channel state information feedback payload configuration. In this case, optionally, the first terminal may report the bitstream based on the changed physical resource configuration to the network device, and the network device may generate corresponding output information based on the bitstream.

[**00240]** In another embodiment, when the second decoder is adapted to the physical resource configuration adopted by the first terminal group, that is, the second decoder is pr-config-specific. If the physical resource configuration of the first terminal is changed, the first terminal may request the network device to send a new training data set for training the second decoder adapted to the changed physical resource configuration, and in this case, the first terminal may report a bitstream based on the changed physical resource configuration to the network device, and the network device may generate corresponding output information based on the bitstream. When the channel state information feedback payload configuration of the first terminal is changed and the second decoder is adapted to the changed channel state information feedback payload configuration, the first terminal may continue using the second decoder, otherwise, the first terminal may request the network device to send a new training data set for training the second decoder adapted to the changed channel state information feedback payload configuration, and in this case, the first terminal may report a bitstream based on the changed channel state information feedback payload configuration to the network device, and the network device may generate corresponding output information based on the bitstream.

[**00241]** In another embodiment, when the second decoder is adapted to the channel state information feedback payload configuration adopted by the first terminal group, that is, the second decoder is fp-config-specific. When the channel state information feedback payload configuration of the first terminal is changed, the first terminal may request the network device to send a new training data set for training the second decoder model adapted to the changed channel state information feedback payload configuration, and in this case, the first terminal may report a bitstream based on the changed channel state information feedback payload configuration to the network device, and the network device generates corresponding output information based on the bitstream. When the physical resource configuration of the first terminal is changed and the second decoder is adapted to the changed physical resource configuration, the first terminal may continue using the second decoder, otherwise the first terminal may request the network device to send a new training data set for training the second decoder model adapted to the changed physical resource configuration, and in this case, the first terminal may report a bitstream based on the changed physical resource configuration to the network device, and the network device may generate corresponding output information based on the bitstream.

[**00242]** In still some embodiments, when the second decoder is adapted to the cell to which the first terminal group belongs, that is, the second decoder is cell-specific. When the physical resource configuration or the channel state information feedback payload configuration of the first terminal is changed, the first terminal may continue using the second decoder without requesting a new training data set from the network device.

[**00243]** In summary, in the embodiment of the present disclosure, the terminal may train the second decoder based on the bitstreams fed back by one or more terminals and the output of the first decoder. Since the label for training the second decoder is the output of the first decoder, the second decoder is used to simulate the function of the first decoder and establish the relationship between the feedback bitstream of the terminal and the output of the first decoder, so that the one or more terminals can monitor the model functions of the first encoder and the first decoder through the first encoder and the second decoder locally deployed, thereby ensuring the accuracy of monitoring model performance.

[**00244]** Further, the terminal side can train the second decoder only based on the output of the first decoder sent to the terminal side through the network side without the network side performing model training and model transfer on the air interface, and monitor the model performance of the combination of the first encoder and the first decoder through the combination of the first encoder and the second decoder. Further, according to the embodiment of the present disclosure, a second decoder which is UE-specific for the local terminal may be implemented on the terminal side, and different terminals may adopt different neural network architectures to match the local encoders of the terminals to achieve good monitoring performance.

[**00245]** Furthermore, with the method in which the terminal side trains the second decoder based on the bitstreams fed back by the terminal group (including multiple terminals), the terminal side can collect a sufficient amount of data as a training set, and thus obtain a second decoder with good generalization performance. Also, the second decoder may be UE-group-specific or cell-specific, and the second decoder having different generalization performance is trained by combining one or more different configurations of data in the terminal group, thereby reducing the switching overhead of the second decoder at the terminal.

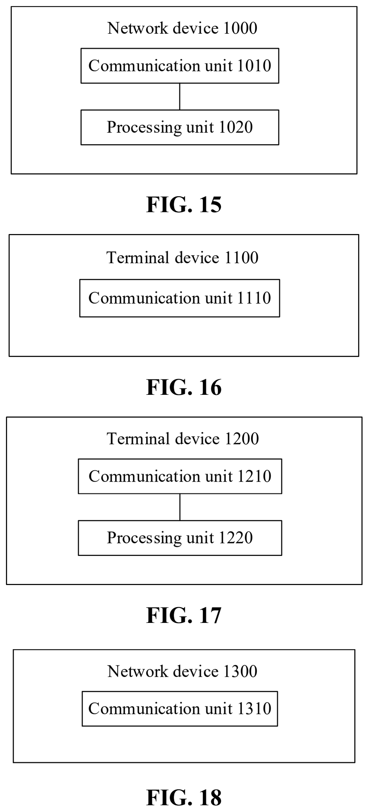

[**00246]** Hereinafter, the embodiments of the method of the present disclosure are described in detail with reference to FIG. 9 to FIG. 14, and the embodiments of the device of the present disclosure are described in detail with reference to FIG. 15 to FIG. 21. It should be understood that the embodiments of the device and the embodiments of the method correspond to each other, and similar descriptions may be made with reference to the embodiments of the method.

[**00247]** FIG. 15 shows a schematic block diagram of a network device 1000 according to an embodiment of the present disclosure. As shown in FIG. 15, the network device 1000 includes a communication unit 1010 and a processing unit 1020.

[**00248]** The communication unit 1010 is configured to acquire a first bitstream group. The first bitstream group includes a bitstream fed back by each terminal in a first terminal group to the network device, a first encoder is deployed on each terminal in the first terminal group, and the bitstream is obtained by encoding channel state information through each terminal based on the first encoder.

[**00249]** The processing unit 1020 is configured to decode the first bitstream group based on a first decoder to obtain a first output information group. The first output information group includes output information obtained by decoding each bitstream in the first bitstream group through the network device. The processing unit 1020 is configured to train a second decoder based on the first bitstream group and the first output information group.

[**00250]** The communication unit 1010 is further configured to transmit model information of the second decoder to each terminal in the first terminal group.

[**00251]** In some embodiments, the first terminal group includes one terminal, and the first bitstream group includes a first bitstream acquired by the network device from the one terminal.

[**00252]** In some embodiments, the second decoder is adapted to a physical resource configuration and a channel state information feedback payload configuration of the one terminal.

[**00253]** In some embodiments, the first terminal group includes multiple terminals.

[**00254]** In some embodiments, the multiple terminals have the same physical resource configuration, and the second decoder is adapted to the same physical resource configuration; or the multiple terminals have different physical resource configurations, and the second decoder is adapted to the different physical resource configurations.

[**00255]** In some embodiments, the multiple terminals have the same channel state information feedback payload configuration, and the second decoder is adapted to the same channel state information feedback payload configuration; or the multiple terminals have different channel state information feedback payload configurations, and the second decoder is adapted to the different channel state information feedback payload configurations.

[**00256]** In some embodiments, the communication unit 1010 is further configured to transmit first indication information to the terminal in the first terminal group, and the first indication information indicates adaptation information of the second decoder.

[**00257]** In some embodiments, the adaptation information of the second decoder comprises at least one of: a physical resource configuration adapted by the second decoder, a channel state information feedback payload configuration adapted by the second decoder, and a cell adapted by the second decoder.

[**00258]** In some embodiments, the first indication information indicates that the second decoder is adapted to a physical resource configuration and a channel state information feedback payload configuration adopted by the first terminal group; or the first indication information indicates that the second decoder is adapted to the physical resource configuration adopted by the first terminal group; or the first indication information indicates that the second decoder is adapted to the channel state information feedback payload configuration adopted by the first terminal group; or the first indication information indicates that the second decoder is adapted to a cell to which the first terminal group belongs.

[**00259]** In some embodiments, the first indication information is transmitted by at least one of the following signaling: a radio resource control (RRC), a medium access control control element (MAC CE), and downlink control information (DCI).

[**00260]** In some embodiments, the communication unit 1010 is further configured to receive first request information transmitted by a first terminal in the first terminal group, and the first request information is used to request updating model information of the second decoder. The first request information is transmitted when a configuration of the first terminal is inconsistent with a configuration adapted by the second decoder.

[**00261]** In some embodiments, the configuration of the first terminal is inconsistent with the configuration adapted by the second decoder in the following conditions.

[**00262]** The physical resource configuration of the first terminal is inconsistent with the physical resource configuration adapted by the second decoder, and/or, the channel state information feedback payload configuration of the first terminal and the channel state information feedback payload configuration adapted by the second decoder.

[**00263]** In some embodiments, the first request information is transmitted by uplink control information (UCI).

[**00264]** In some embodiments, the operation that the network device trains the second decoder based on the first bitstream group and the first output information group may include the following operation.

[**00265]** The network device trains the second decoder with taking the first bitstream group as an input and taking the first output information group as a label.

[**00266]** Optionally, in some embodiments, the above-described communication unit may be a communication interface or a transceiver, or an input/output interface of a communication chip or a system-on-chip. The above processing unit may be one or more processors.

[**00267]** It should be understood that the network device 1000 according to the embodiment of the present disclosure may correspond to the network device in the embodiment of the method of the present disclosure, and the above-described and other operations and/or functions of each unit in the network device 1000 are respectively used to implement the corresponding flow of the network device in the method 200 shown in FIG. 9 to FIG. 11, and thus are not described herein for the sake of brevity.

[**00268]** FIG. 16 is a schematic block diagram of a terminal device 1100 according to an embodiment of the present disclosure. As shown in FIG. 16, the terminal device 1100 includes a communication unit 1110.

[**00269]** The communication unit 1110 is configured to transmit a first bitstream to a network device. A first encoder is deployed on the terminal device, the first bitstream is obtained by encoding channel state information through the terminal device based on the first encoder, and a first decoder is deployed on the network device.

[**00270]** The communication unit 1110 is configured to receive model information of a second decoder transmitted by the network device. The second decoder is trained by the network device based on the first bitstream group and the first output information group, the first bitstream group includes a bitstream fed back by each terminal in a first terminal group to the network device, a first output information group includes output information obtained by decoding each bitstream in the first bitstream group through the network device based on the first decoder, and the first terminal group includes the terminal device.

[**00271]** In some embodiments, the first terminal group includes only the terminal device.

[**00272]** In some embodiments, the second decoder is adapted to a physical resource configuration and a channel state information feedback payload configuration of the terminal device.

[**00273]** In some embodiments, the first terminal group includes multiple terminals.

[**00274]** In some embodiments, the multiple terminals have the same physical resource configuration, and the second decoder is adapted to the same physical resource configuration.

[**00275]** Alternatively, the multiple terminals have different physical resource configurations, and the second decoder is adapted to the different physical resource configurations.

[**00276]** In some embodiments, the multiple terminals have the same channel state information feedback payload configuration, and the second decoder is adapted to the same channel state information feedback payload configuration; or the multiple terminals have different channel state information feedback payload configurations, and the second decoder is adapted to the different channel state information feedback payload configurations.

[**00277]** In some embodiments, the communication unit 1110 is further configured to: receive first indication information transmitted by the network device. The first indication information indicates adaptation information of the second decoder.

[**00278]** In some embodiments, the first indication information indicates at least one of a physical resource configuration, a channel state information feedback payload configuration and a cell to which the second decoder is adapted.

[**00279]** In some embodiments, the first indication information indicates that the second decoder is adapted to a physical resource configuration and a channel state information feedback payload configuration adopted by the first terminal group.

[**00280]** Alternatively, the first indication information indicates that the second decoder is adapted to the physical resource configuration adopted by the first terminal group.

[**00281]** Alternatively, the first indication information indicates that the second decoder is adapted to the channel state information feedback payload configuration adopted by the first terminal group.

[**00282]** Alternatively, the first indication information indicates that the second decoder is adapted to a cell to which the first terminal group belongs.

[**00283]** In some embodiments, the first indication information is transmitted by at least one of the following signaling: a radio resource control (RRC), a medium access control control element (MAC CE), and downlink control information (DCI).

[**00284]** In some embodiments, the communication unit 1110 is further configured to: when a configuration of the terminal device is inconsistent with a configuration adapted by the second decoder, transmit first request information to the network device. The first request information is used to request updating model information of the second decoder.

[**00285]** In some embodiments, the configuration of the first terminal is inconsistent with the configuration adapted by the second decoder in the following conditions.

[**00286]** The physical resource configuration of the first terminal is inconsistent with the physical resource configuration adapted by the second decoder, and/or, the channel state information feedback payload configuration of the first terminal and the channel state information feedback payload configuration adapted by the second decoder.

[**00287]** In some embodiments, the first request information is transmitted by uplink control information (UCI).

[**00288]** Optionally, in some embodiments, the above-described communication unit may be a communication interface or a transceiver, or an input/output interface of a communication chip or a system-on-chip. The above processing unit may be one or more processors.

[**00289]** It should be understood that the terminal device 1100 according to the embodiment of the present disclosure may correspond to the first terminal in the embodiment of the method of the present disclosure, and the above-described and other operations and/or functions of each unit in the terminal device 1100 are respectively used to implement the corresponding flow of the first terminal in the method 200 shown in FIG. 9 to FIG. 11, and thus are not described herein for the sake of brevity.

[**00290]** FIG. 17 is a schematic block diagram of a terminal device 1200 according to an embodiment of the present disclosure. As shown in FIG. 17, the terminal device 1200 includes a communication unit 1210 and a processing unit 1210.

[**00291]** The communication unit 1210 is configured to acquire a first bitstream group and a first output information group. The first bitstream group includes a bitstream fed back by each terminal in a first terminal group to a network device, a first encoder is deployed on each terminal in the first terminal group, the bitstream is obtained by encoding input channel state information through each terminal based on the first encoder, and the first output information group comprises output information obtained by decoding each bitstream in the first bitstream group through the network device based on the first decoder.

[**00292]** The processing unit 1210 is configured to train a second decoder based on the first bitstream group and the first output information group.

[**00293]** In some embodiments, the first terminal group includes only the terminal device.

[**00294]** In some embodiments, the first bitstream group comprises a first bitstream determined by the terminal device.

[**00295]** The first output information group includes first output information obtained from the network device.

[**00296]** In some embodiments, the second decoder is adapted to a physical resource configuration and a channel state information feedback payload configuration of the terminal device.

[**00297]** In some embodiments, the first terminal group includes multiple terminals.

[**00298]** In some embodiments, the first bitstream group and the first output information group are obtained from the network device.

[**00299]** In some embodiments, the multiple terminals have the same physical resource configuration, and the second decoder is adapted to the same physical resource configuration.

[**00300]** Alternatively, the multiple terminals have different physical resource configurations, and the second decoder is adapted to the different physical resource configurations.

[**00301]** In some embodiments, the multiple terminals have the same channel state information feedback payload configuration, and the second decoder is adapted to the same channel state information feedback payload configuration.

[**00302]** Alternatively, the multiple terminals have different channel state information feedback payload configurations, and the second decoder is adapted to the different channel state information feedback payload configurations.

[**00303]** In some embodiments, the communication unit 1210 is further configured to, when a configuration of the terminal device is inconsistent with a configuration adapted by the second decoder, transmit second request information to the network device, and the second request information is used to request acquiring a data set for training a second decoder adapted to the configuration of the terminal device.

[**00304]** In some embodiments, the configuration of the terminal device is inconsistent with the configuration adapted by the second decoder in the following conditions.

[**00305]** The physical resource configuration of the terminal device is inconsistent with the physical resource configuration adapted by the second decoder, and/or, the channel state information feedback payload configuration of the terminal device and the channel state information feedback payload configuration adapted by the second decoder.

[**00306]** In some embodiments, the second request information is transmitted by uplink control information (UCI).

[**00307]** In some embodiments, the processing unit 1220 is further configured to: train the second decoder with taking the first bitstream group as an input and taking the first output information group as a label.

[**00308]** Optionally, in some embodiments, the above-described communication unit may be a communication interface or a transceiver, or an input/output interface of a communication chip or a system-on-chip. The above processing unit may be one or more processors.

[**00309]** It should be understood that the terminal device 1200 according to the embodiment of the present disclosure may correspond to the first terminal in the embodiment of the method of the present disclosure, and the above-described and other operations and/or functions of each unit in the terminal device 1200 are respectively used to implement the corresponding flow of the first terminal in the method 300 shown in FIG. 12 to FIG. 14, and thus are not described herein for the sake of brevity.

[**00310]** FIG. 18 shows a schematic block diagram of a network device 1300 according to an embodiment of the present disclosure. As shown in FIG. 18, the network device 1300 includes a communication unit 1300.

[**00311]** The communication unit 1310 is configured to transmit a first bitstream group and/or a first output information group to the first terminal. The first bitstream group includes a bitstream fed back to the network device by each terminal in the first terminal group, a first encoder is deployed on each terminal in the first terminal group, the bitstream is obtained by encoding input channel state information through each terminal based on the first encoder, and the first output information group includes output information obtained by decoding each bitstream in the first bitstream group through the network device based on the first decoder.

[**00312]** In some embodiments, the first bitstream group and/or the first output information group is used by the first terminal to train a second decoder.

[**00313]** In some embodiments, the first terminal group includes only the first terminal.

[00314] In some embodiments, the second decoder is adapted to a physical resource configuration and a channel state information feedback payload configuration of the first termial.

[**00315]** In some embodiments, the first terminal group includes multiple terminals.

[**00316]** In some embodiments, the multiple terminals have the same physical resource configuration, and the second decoder is adapted to the same physical resource configuration.

[**00317]** Alternatively, the multiple terminals have different physical resource configurations, and the second decoder is adapted to the different physical resource configurations.

[**00318]** In some embodiments, the multiple terminals have the same channel state information feedback payload configuration, and the second decoder is adapted to the same channel state information feedback payload configuration.

[**00319]** Alternatively, the multiple terminals have different channel state information feedback payload configurations, and the second decoder is adapted to the different channel state information feedback payload configurations.

[**00320]** In some embodiments, the communication unit 1310 is further configured to receive second request information transmitted by the first terminal, and the second request information is used to request acquiring a data set for training a second decoder adapted to the configuration of the first terminal.

[**00321]** In some embodiments, the second request information is transmitted by uplink control information (UCI).

[**00322]** Optionally, in some embodiments, the above-described communication unit may be a communication interface or a transceiver, or an input/output interface of a communication chip or a system-on-chip. The above processing unit may be one or more processors.

[**00323]** It should be understood that the network device 1300 according to the embodiment of the present disclosure may correspond to the network device in the embodiment of the method of the present disclosure, and the above-described and other operations and/or functions of each unit in the network device 1300 are respectively used to implement the corresponding flow of the network device in the method 300 shown in FIG. 12 to FIG. 14, and thus are not described herein for the sake of brevity.

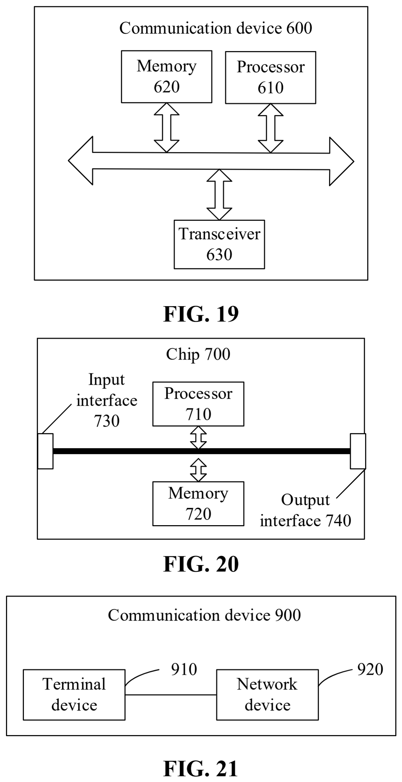

[**00324]** FIG. 19 is a schematic structural diagram of a communication device 600 according to an embodiment of the present disclosure. The communication device 600 illustrated in FIG. 19 includes a processor 610 that can invoke and run a computer program from a memory to implement the method in the embodiment of the present disclosure.

[**00325]** Optionally, as shown in FIG. 19, the communication device 600 may further include a memory 620. The processor 610 may invoke and run a computer program from the memory 620 to implement the method in embodiments of the present disclosure.

[**00326]** The memory 620 may be a separate device independent of the processor 610 or may be integrated into the processor 610.

[**00327]** Optionally, as shown in FIG. 19, the communication device 600 may further include a transceiver 630, and the processor 610 may control the transceiver 630 to communicate with other devices. In particular, the processor may control the transceiver to transmit information or data to another device, or receive information or data transmitted by another device.

[**00328]** The transceiver 630 may include a transmitter and a receiver. The transceiver 630 may further include antennas, and the number of antennas may be one or more.

[**00329]** Optionally, the communication device 600 may be a network device according to the embodiment of the present disclosure, and the communication device 600 may implement corresponding flows implemented by the network device in each method according to the embodiment of the present disclosure, and will not be described herein for the sake of brevity.

[**00330]** Optionally, the communication device 600 may specifically be a mobile terminal/terminal device/first terminal according to the embodiment of the present disclosure, and the communication device 600 may implement corresponding flows implemented by the mobile terminal/terminal device/first terminal in each method according to the embodiment of the present disclosure, and will not be repeatedly described here for the sake of brevity.

[**00331]** FIG. 20 is a schematic structural diagram of a chip according to an embodiment of the present disclosure. The chip 700 shown in FIG. 20 includes a processor 710, which may invoke and run a computer program from a memory to implement the method in the embodiment of the present disclosure.

[**00332]** Optionally, as shown in FIG. 20, the chip 700 may further include a memory 720. The processor 710 may invoke and run a computer program from the memory 720 to implement the method in embodiments of the present disclosure.

[**00333]** The memory 720 may be a separate device independent of the processor 710 or may be integrated into the processor 710.

[**00334]** Optionally, the chip 700 may further include an input interface 730. The processor 710 may control the input interface 730 to communicate with other devices or chips. Specifically, the processor 710 may control the input interface 730 to obtain information or data transmitted by other devices or chips.

[**00335]** Optionally, the chip 700 may further include an output interface 740. The processor 710 may control the output interface 740 to communicate with other devices or chips, Specifically, the processor 710 may control the output interface 740 to output information or data to other devices or chips.

[**00336]** Optionally, the chip can be applied to the network device in the embodiment of the present disclosure, and the chip can implement the corresponding flows implemented by the network device in each method of the embodiment of the present disclosure, and will not be repeated here for the sake of brevity.

[**00337]** Optionally, the chip can be applied to the mobile terminal/terminal device/first terminal in the embodiment of the present disclosure, and the chip can implement corresponding flows implemented by the mobile terminal/terminal device/first terminal in each method of the embodiment of the present disclosure, and will not be repeatedly described here for the sake of brevity.

[**00338]** It should be understood that the chip mentioned in the embodiments of the present disclosure may also be referred to as a system-level chip, a system chip, a chip system, a system-on-chip chip or the like.

[**00339]** FIG. 21 is a schematic block diagram of a communication system 900 according to an embodiment of the present disclosure. As shown in FIG. 21, the communication system 900 includes a terminal device 910 and a network device 920.

[**00340]** The terminal device 910 may be used to implement the corresponding functions implemented by the mobile terminal/terminal device/first terminal in the above-described method, and the network device 920 may be used to implement the corresponding functions implemented by the network device in the above-described method, and will not be described herein for the sake of brevity.

[**00341]** It should be understood that the processor of the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or a transistor logic device, or a discrete hardware component, to implement or execute the methods, steps, and logical block diagrams disclosed in the embodiments of the present disclosure. The general purpose processor may be a microprocessor, or the processor may be any conventional processor or the like. The operations of the method disclosed in connection with the embodiments of the present disclosure may be directly executed by the hardware decoding processor, or may be executed by combining hardware and software modules in the decoding processor. The software module may be provided in a storage medium mature in the art, such as a random access memory, a flash memory, a read-only memory, a programmable read-only memory, or an electrically erasable programmable memory, a register, etc. The storage medium is arranged in the memory, and the processor reads the information in the memory, and implements the operations of the above method in combination with the hardware thereof.

[**00342]** It is understood that the memory in the embodiments of the present disclosure may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. By way of illustration, but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the systems and methods described herein is intended to include, but is not limited to, these and any other suitable type of memory.

[**00343]** It should be understood that the above memory is illustrative rather than restrictive, for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM), and the like. That is, the memory in the embodiments of the present disclosure is intended to include, but is not limited to, these and any other suitable type of memory.

[**00344]** The embodiments of the present disclosure further provide a computer-readable storage medium for storing a computer program.

[**00345]** Optionally, the computer-readable storage medium may be applied to the network device in the embodiment of the present disclosure, and the computer program causes the computer to execute the corresponding flows implemented by the network device in each method in the embodiment of the present disclosure, and the flows are not repeated here for the sake of brevity.

[**00346]** Optionally, the computer-readable storage medium may be applied to the mobile terminal/terminal device/first terminal in the embodiment of the present disclosure, and the computer program causes the computer to execute the corresponding flows implemented by the mobile terminal/terminal device/first terminal in each method of the embodiment of the present disclosure, and the flows are not repeated here for the sake of brevity.

[**00347]** The embodiments of the present disclosure further provide a computer program product including computer program instructions.

[**00348]** Optionally, the computer program product may be applied to the network device in the embodiment of the present disclosure, and the computer program instruction causes the computer to execute the corresponding flows implemented by the network device in each method in the embodiment of the present disclosure, and the flows are not repeated here for the sake of brevity.

[**00349]** Optionally, the computer program product may be applied to the mobile terminal/terminal device/first terminal in the embodiment of the present disclosure, and the computer program instruction causes the computer to execute the corresponding flows implemented by the mobile terminal/terminal device/first terminal in each method of the embodiment of the present disclosure, and the flows are not repeated here for the sake of brevity.

[**00350]** The embodiments of the present disclosure further provide a computer program.

[**00351]** Optionally, the computer program may be applied to the network device in the embodiment of the present disclosure, and when the computer program is run on the computer, the computer executes the corresponding flows implemented by the network device in each method of the embodiment of the present disclosure, and the flows are not repeated here for the sake of brevity.

[**00352]** Optionally, the computer program may be applied to the mobile terminal/terminal device/first terminal in the embodiment of the present disclosure, and when the computer program is run on the computer, the computer executes the corresponding flows implemented by the mobile terminal/terminal device/first terminal in each method of the embodiment of the present disclosure, and the flows are not repeated here for the sake of brevity.

[**00353]** Those of ordinary skill in the art will appreciate that the units and the algorithmic steps of the various examples described in connection with the embodiments disclosed herein may be implemented in electronic hardware, or a combination of computer software and electronic hardware. Whether these functions are performed in hardware or software depends on the specific application and design constraints of the technical solution. Those skilled in the art may use different methods to implement the described functions for each particular application, but such implementations should not be considered beyond the scope of the present disclosure.

[**00354]** Those skilled in the art may clearly understand that, for convenience and conciseness of the description, regarding the specific operation processes of the systems, devices, and units described above, reference may be made to the corresponding processes in the aforementioned method embodiments, and the specific operation processes of the systems, devices, and units described above are not repeated here.

[**00355]** In several embodiments provided herein, it should be understood that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection shown or discussed may be an indirect coupling or communication connection through some interface, device or unit, which may be electrical, mechanical or otherwise.

[**00356]** The units described as separate units may or may not be physically separate, and the units displayed as units may or may not be physical units, that is, the units may be located in the same place or may be distributed over a plurality of network units. A part or all of the units may be selected according to actual needs to achieve the purpose of the solution of the present embodiment.

[**00357]** In addition, all of the functional units in each embodiment of the present disclosure may be integrated in one processing unit, or each functional unit may be physically present alone, or two or more units may be integrated into one unit.

[**00358]** The functions may be stored in a computer-readable storage medium if the functions are implemented in the form of software functional units and sold or used as independent products. Based on this understanding, the essential part of the technical solution of the present disclosure or a part of the technical solution that contributes to the prior art or a part of the technical solution may be embodied in the form of a software product, the computer software product is stored in a storage medium, includes several instructions for causing a computer device (which may be a personal computer, a server, or a network device, etc.) to perform all or a part of the operations of the method described in various embodiments of the present disclosure. The storage medium includes a USB disk, a removable hard disk, a read-only memory (ROM), a random access memory (RAM), a magnetic disk, an optical disk or various mediums that can store a program code.

[**00359]** The foregoing are merely specific embodiments of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A wireless communication method, comprising:
acquiring, by a network device, a first bitstream group, wherein the first bitstream group comprises a bitstream fed back by each terminal in a first terminal group to the network device, a first encoder is deployed on each terminal in the first terminal group, and the bitstream is obtained by encoding channel state information through each terminal based on the first encoder;
decoding, by the network device, the first bitstream group based on a first decoder to obtain a first output information group, wherein the first output information group comprises output information obtained by decoding each bitstream in the first bitstream group through the network device;
training, by the network device, a second decoder based on the first bitstream group and the first output information group; and
transmitting, by the network device, model information of the second decoder to each terminal in the first terminal group.

2. The method of claim 1, wherein the first terminal group comprises one terminal, and the first bitstream group comprises a first bitstream acquired by the network device from the one terminal.

3. The method of claim 2, wherein the second decoder is adapted to a physical resource configuration and a channel state information feedback payload configuration of the one terminal.

4. The method of claim 1, wherein the first terminal group comprises a plurality of terminals.

5. The method of claim 4, wherein the plurality of terminals have a same physical resource configuration, and the second decoder is adapted to the same physical resource configuration; or
the plurality of terminals have different physical resource configurations, and the second decoder is adapted to the different physical resource configurations.

6. The method of claim 4 or 5, wherein the plurality of terminals have a same channel state information feedback payload configuration, and the second decoder is adapted to the same channel state information feedback payload configuration; or
the plurality of terminals have different channel state information feedback payload configurations, and the second decoder is adapted to the different channel state information feedback payload configurations.

7. The method of any one of claims 1 to 6, further comprising:
transmitting, by the network device, first indication information to the terminal in the first terminal group, wherein the first indication information indicates adaptation information of the second decoder.

8. The method of claim 7, wherein the adaptation information of the second decoder comprises at least one of:
a physical resource configuration adapted by the second decoder, a channel state information feedback payload configuration adapted by the second decoder, and a cell adapted by the second decoder.

9. The method of claim 8, wherein the first indication information indicates that the second decoder is adapted to a physical resource configuration and a channel state information feedback payload configuration adopted by the first terminal group; or
the first indication information indicates that the second decoder is adapted to the physical resource configuration adopted by the first terminal group; or
the first indication information indicates that the second decoder is adapted to the channel state information feedback payload configuration adopted by the first terminal group; or
the first indication information indicates that the second decoder is adapted to a cell to which the first terminal group belongs.

10. The method of any one of claims 7 to 9, wherein the first indication information is transmitted by at least one of following signaling: a radio resource control (RRC), a medium access control control element (MAC CE), and downlink control information (DCI).

11. The method of any one of claims 1 to 10, further comprising:
receiving, by the network device, first request information transmitted by a first terminal in the first terminal group, wherein the first request information is used to request updating the model information of the second decoder, and the first request information is transmitted in response to a configuration of the first terminal being inconsistent with a configuration adapted by the second decoder.

12. The method of claim 11, wherein the configuration of the first terminal being inconsistent with the configuration adapted by the second decoder comprises:
a physical resource configuration of the first terminal being inconsistent with a physical resource configuration adapted by the second decoder, and/or,
a channel state information feedback payload configuration of the first terminal and a channel state information feedback payload configuration adapted by the second decoder.

13. The method of claim 11 or 12, wherein the first request information is transmitted by uplink control information (UCI).

14. The method of any one of claims 1 to 13, wherein the training, by the network device, the second decoder based on the first bitstream group and the first output information group comprises:
training, by the network device, the second decoder with taking the first bitstream group as an input and the first output information group as a label.

15. A wireless communication method, comprising:
transmitting, by a first terminal, a first bitstream to a network device, wherein a first encoder is deployed on the first terminal, the first bitstream is obtained by encoding channel state information through the first terminal based on the first encoder, and a first decoder is deployed on the network device; and
receiving, by the first terminal, model information of a second decoder transmitted by the network device, wherein the second decoder is trained by the network device based on a first bitstream group and a first output information group, the first bitstream group comprises a bitstream fed back to the network device by each terminal in a first terminal group, the first output information group comprises output information obtained by decoding each bitstream in the first bitstream group through the network device based on the first decoder, and the first terminal group comprises the first terminal.

16. The method of claim 15, wherein the first terminal group comprises only the first terminal.

17. The method of claim 16, wherein the second decoder is adapted to a physical resource configuration and a channel state information feedback payload configuration of the first terminal.

18. The method of claim 15, wherein the first terminal group comprises a plurality of terminals.

19. The method of claim 18, wherein the plurality of terminals have a same physical resource configuration, and the second decoder is adapted to the same physical resource configuration; or
the plurality of terminals have different physical resource configurations, and the second decoder is adapted to the different physical resource configurations.

20. The method of claim 18 or 19, wherein the plurality of terminals have a same channel state information feedback payload configuration, and the second decoder is adapted to the same channel state information feedback payload configuration; or
the plurality of terminals have different channel state information feedback payload configurations, and the second decoder is adapted to the different channel state information feedback payload configurations.

21. The method of any one of claims 15 to 20, further comprising:
receiving, by the first terminal, first indication information transmitted by the network device, wherein the first indication information indicates adaptation information of the second decoder.

22. The method of claim 21, wherein the first indication information indicates at least one of a physical resource configuration, a channel state information feedback payload configuration, and a cell to which the second decoder is adapted.

23. The method of claim 22, wherein the first indication information indicates that the second decoder is adapted to a physical resource configuration and a channel state information feedback payload configuration adopted by the first terminal group; or
the first indication information indicates that the second decoder is adapted to the physical resource configuration adopted by the first terminal group; or
the first indication information indicates that the second decoder is adapted to the channel state information feedback payload configuration adopted by the first terminal group; or
the first indication information indicates that the second decoder is adapted to a cell to which the first terminal group belongs.

24. The method of any one of claims 21 to 23, wherein the first indication information is transmitted by at least one of following signaling: a radio resource control (RRC), a medium access control control element (MAC CE), and a downlink control information (DCI).

25. The method of any one of claims 15 to 24, further comprising:
in response to a configuration of the first terminal being inconsistent with a configuration adapted by the second decoder, transmitting, by the first terminal, first request information to the network device, wherein the first request information is used to request updating the model information of the second decoder.

26. The method of claim 25, wherein the configuration of the first terminal being inconsistent with the configuration adapted by the second decoder comprises:
a physical resource configuration of the first terminal being inconsistent with a physical resource configuration adapted by the second decoder, and/or,
a channel state information feedback payload configuration of the first terminal and a channel state information feedback payload configuration adapted by the second decoder.

27. The method of claim 25 or 26, wherein the first request information is transmitted by uplink control information (UCI).

28. A wireless communication method, comprising:
acquiring, by a first terminal, a first bitstream group and a first output information group, wherein the first bitstream group comprises a bitstream fed back by each terminal in a first terminal group to a network device, a first encoder is deployed on each terminal in the first terminal group, the bitstream is obtained by encoding input channel state information through each terminal based on the first encoder, and the first output information group comprises output information obtained by decoding each bitstream in the first bitstream group through the network device based on the first decoder;
training, by the first terminal, a second decoder based on the first bitstream group and the first output information group.

29. The method of claim 28, wherein the first terminal group comprises only the first terminal.

30. The method of claim 29, wherein
the first bitstream group comprises a first bitstream, and the first bitstream is determined by the first terminal; and
the first output information group comprises first output information obtained from the network device.

31. The method according to claim 29 or 30, wherein the second decoder is adapted to a physical resource configuration and a channel state information feedback payload configuration of the first terminal.

32. The method of claim 28, wherein the first terminal group comprises a plurality of terminals.

33. The method of claim 32, wherein the first bitstream group and the first output information group are acquired from the network device.

34. The method of claim 32 or 33, wherein the plurality of terminals have a same physical resource configuration, and the second decoder is adapted to the same physical resource configuration; or
the plurality of terminals have different physical resource configurations, and the second decoder is adapted to the different physical resource configurations.

35. The method of any one of claims 32 to 34, wherein the plurality of terminals have a same channel state information feedback payload configuration, and the second decoder is adapted to the same channel state information feedback payload configuration; or
the plurality of terminals have different channel state information feedback payload configurations, and the second decoder is adapted to the different channel state information feedback payload configurations.

36. The method of any one of claims 28 to 35, further comprising:
in response to a configuration of the first terminal being inconsistent with a configuration adapted by the second decoder, transmitting, by the first terminal, second request information to the network device, wherein the second request information is used to request acquiring a data set for training a second decoder adapted to the configuration of the first terminal.

37. The method of claim 36, wherein the configuration of the first terminal being inconsistent with the configuration adapted by the second decoder comprises:
a physical resource configuration of the first terminal being inconsistent with a physical resource configuration adapted by the second decoder, and/or,
a channel state information feedback payload configuration of the first terminal and a channel state information feedback payload configuration adapted by the second decoder.

38. The method of claim 36 or 37, wherein the second request information is transmitted by uplink control information (UCI).

39. The method of any one of claims 28 to 38, wherein the training, by the first terminal, a second decoder based on the first bitstream group and the first output information group comprises:
training, by the first terminal, the second decoder with taking the first bitstream group as an input and the first output information group as a label.

40. A wireless communication method, comprising:
transmitting, by a network device, a first bitstream group and/or a first output information group to a first terminal, wherein the first bitstream group comprises a bitstream fed back by each terminal in a first terminal group to the network device, a first encoder is deployed on each terminal in the first terminal group, the bitstream is obtained by encoding input channel state information through each terminal based on the first encoder, the first output information group comprises output information obtained by decoding each bitstream in the first bitstream group through the network device based on the first decoder, the first bitstream group and/or the first output information group are used by the first terminal to train a second decoder.

41. The method of claim 40, wherein the first terminal group comprises only the first terminal.

42. The method according to claim 41, wherein the first bitstream group and/or the first output information group are used by the first terminal to train the second decoder, and the second decoder is adapted to a physical resource configuration and a channel state information feedback payload configuration of the first terminal.

43. The method of claim 40, wherein the first terminal group comprises a plurality of terminals.

44. The method of claim 43, wherein the plurality of terminals have a same physical resource configuration, and the second decoder is adapted to the same physical resource configuration; or
the plurality of terminals have different physical resource configurations, and the second decoder is adapted to the different physical resource configurations.

45. The method of claim 43 or 44, wherein the plurality of terminals have a same channel state information feedback payload configuration, and the second decoder is adapted to the same channel state information feedback payload configuration; or
the plurality of terminals have different channel state information feedback payload configurations, and the second decoder is adapted to the different channel state information feedback payload configurations.

46. The method of any one of claims 40 to 45, further comprising:
receiving, by the network device, second request information transmitted by the first terminal, wherein the second request information is used to request acquiring a data set for training a second decoder adapted to a configuration of the first terminal.

47. The method of claim 46, wherein the second request information is transmitted by uplink control information (UCI).

48. A network device, comprising:
a communication unit configured to acquire a first bitstream group, wherein the first bitstream group comprises a bitstream fed back by each terminal in a first terminal group to the network device, a first encoder is deployed on each terminal in the first terminal group, and the bitstream is obtained by encoding channel state information through each terminal based on the first encoder; and
a processing unit configured to: decode the first bitstream group based on a first decoder to obtain a first output information group, wherein the first output information group comprises output information obtained by decoding each bitstream in the first bitstream group through the network device; and train a second decoder based on the first bitstream group and the first output information group,
wherein the communication unit is further configured to transmit model information of the second decoder to each terminal in the first terminal group.

49. A terminal device, comprising a communication unit configured to:
transmit a first bitstream to a network device, wherein a first encoder is deployed on the terminal device, the first bitstream is obtained by encoding channel state information through the terminal device based on the first encoder, and a first decoder is deployed on the network device; and
receive model information of a second decoder transmitted by the network device, wherein the second decoder is trained by the network device based on a first bitstream group and a first output information group, the first bitstream group comprises a bitstream fed back to the network device by each terminal in a first terminal group, the first output information group comprises output information obtained by decoding each bitstream in the first bitstream group through the network device based on the first decoder, and the first terminal group comprises the first terminal.

50. A terminal device, comprising:
a communication unit configured to acquire a first bitstream group and a first output information group, wherein the first bitstream group comprises a bitstream fed back by each terminal in a first terminal group to the network device, a first encoder is deployed on each terminal in the first terminal group, the bitstream is obtained by encoding input channel state information through each terminal based on the first encoder, and the first output information group comprises output information obtained by decoding each bitstream in the first bitstream group through the network device based on the first decoder; and
a processing unit configured to train a second decoder based on the first bitstream group and the first output information group.

51. A network device, comprising:
a communication unit configured to transmit a first bitstream group and/or a first output information group to the first terminal, wherein the first bitstream group comprises a bitstream fed back by each terminal in a first terminal group to the network device, a first encoder is deployed on each terminal in the first terminal group, the bitstream is obtained by encoding input channel state information through each terminal based on the first encoder, and the first output information group comprises output information obtained by decoding each bitstream in the first bitstream group through the network device based on the first decoder.

52. A terminal device, comprising a processor and a memory for storing a computer program, wherein the processor is configured for invoking and executing the computer program stored in the memory to perform the method of any one of claims 15 to 27 or the method of any one of claims 28 to 39.

53. A network device, comprising a processor and a memory for storing a computer program, wherein the processor is configured for invoking and executing the computer program stored in the memory to perform the method of any one of claims 1 to 14 or the method of any one of claims 40 to 47.

54. A chip, comprising a processor for invoking and executing a computer program from a memory to enable a device on which the chip is mounted to perform the method of any one of claims 1 to 14, or the method of any one of claims 15 to 27, or the method of any one of claims 28 to 39, or the method of any one of claims 40 to 47.

55. A computer-readable storage medium for storing a computer program that causes a computer to perform the method of any one of claims 1 to 14, or the method of any one of claims 15 to 27, or the method of any one of claims 28 to 39, or the method of any one of claims 40 to 47.

56. A computer program product comprising a computer program instruction that causes a computer to perform the method of any one of claims 1 to 14, or the method of any one of claims 15 to 27, or the method of any one of claims 28 to 39, or the method of any one of claims 40 to 47.

57. A computer program that causes a computer to perform the method of any one of claims 1 to 14, or the method of any one of claims 15 to 27, or the method of any one of claims 28 to 39, or the method of any one of claims 40 to 47.
